# EUROPEAN PATENT APPLICATION

(11) **EP 4 845 038 A1**
(43) Date of publication of application: **25.11.2026**
(21) Application number: 25747800.8
(22) Date of filing: 24.01.2025
(51) Int. Cl.: H04B 1/04

(54) **COMMUNICATION METHOD AND APPARATUS**

(30) Priority: 02.02.2024 CN 202410156645
(71) Applicant: Huawei Technologies Co., Ltd., Shenzhen, Guangdong 518129 (CN)
(72) Inventor: ZHAO, Xuan, Shenzhen, Guangdong 518129 (CN); KONG, Lingyu, Shenzhen, Guangdong 518129 (CN); DAI, Xizeng, Shenzhen, Guangdong 518129 (CN); LIU, Daoming, Shenzhen, Guangdong 518129 (CN); LI, Xiang, Shenzhen, Guangdong 518129 (CN)
(74) Representative: Huawei European IPR
(86) International application number: PCT/CN2025/074578
(87) International publication number: WO 2025/162232

(57) **Abstract**

This application relates to the field of communication technologies, and in particular, to a communication method and apparatus designed to align nonlinear effects experienced by a DMRS and data, enabling accurate nonlinear compensation for the data by using the nonlinear estimation result of the DMRS, thereby improving data transmission performance. The method includes: determining a first power boosting value, where the first power boosting value is determined based on a transmission configuration of a first DMRS and a mapping relationship between a DMRS transmission configuration and a power boosting value, or the first power boosting value is determined based on a difference between a PAPR of the first DMRS and a PAPR of data; and sending the data to a second communication apparatus, and sending the first DMRS to the second communication apparatus based on the first power boosting value, where a nonlinear estimation result obtained based on the first DMRS is used by the second communication apparatus to perform nonlinear compensation on the data.

## Description

### CROSS-REFERENCE TO RELATED APPLICATIONS

This application claims priority to Chinese Patent Application No. 202410156645.8, filed with the China National Intellectual Property Administration on February 2, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A power amplifier (power amplifier, PA) can amplify a low-power signal generated by a network device or a terminal device to a power level suitable for long-distance transmission, and is a core component of a wireless communication device. During power amplification, the PA may introduce nonlinear distortion, degrading performance metrics of the sent signal. For example, nonlinear distortion caused by the PA may lead to increased bit error rate of the sent signal, degraded error vector magnitude (error vector magnitude, EVM) performance, and the like.

To resolve this problem, receive-end nonlinear compensation may be used. The receive-end nonlinear compensation can be implemented through nonlinear estimation based on a demodulation reference signal (demodulation reference signal, DMRS). However, because the peak-to-average power ratio (peak-to-average power ratio, PAPR) of the DMRS is inconsistent with that of data, the DMRS and the data experience inconsistent nonlinear effects. Therefore, accurate nonlinear compensation cannot be applied to the data using the DMRS nonlinear estimation result, thereby degrading data transmission performance.

### SUMMARY

Embodiments of this application provide a communication method and apparatus to improve data transmission performance.

According to a first aspect, an embodiment of this application provides a communication method. The method may be performed by a first communication apparatus, and the method includes: determining a first power boosting value, where the first power boosting value is determined based on a transmission configuration of a first DMRS and a mapping relationship between a DMRS transmission configuration and a power boosting value, or the first power boosting value is determined based on a difference between a PAPR of the first DMRS and a PAPR of data; and sending the data to a second communication apparatus, and sending the first DMRS to the second communication apparatus based on the first power boosting value, where a nonlinear estimation result obtained based on the first DMRS is used by the second communication apparatus to perform nonlinear compensation on the data.

It may be understood that the DMRS (for example, the first DMRS) may also be replaced with a reference signal, and the reference signal may be an uplink reference signal (for example, a DMRS or a sounding reference signal (sounding reference signal, SRS)), a downlink reference signal (for example, a cell reference signal (cell reference signal, CRS)), a sidelink reference signal, or the like; and the communication method may be used for nonlinear estimation and nonlinear compensation in scenarios such as uplink communication, downlink communication, and sidelink communication.

In the foregoing communication method, the first communication apparatus may be a terminal device, a component (for example, a processor, a chip, or a chip system) of the terminal device, or an apparatus used together with the terminal device; and the second communication apparatus may be a network device, a component (for example, a processor, a chip, or a chip system) of the network device, or an apparatus used together with the network device. Alternatively, the first communication apparatus may be a network device, a component (for example, a processor, a chip, or a chip system) of the network device, or an apparatus used together with the network device; and the second communication apparatus may be a terminal device, a component (for example, a processor, a chip, or a chip system) of the terminal device, an apparatus used together with the terminal device, or the like.

In this embodiment of this application, considering that both average power and a PAPR affect nonlinear distortion of a signal, power boosting may be performed on a DMRS, so that the DMRS and data experience consistent nonlinear effects. Therefore, accurate nonlinear compensation performed on the data by using a nonlinear estimation result of the DMRS is supported, to improve data transmission performance.

In a possible design, the DMRS transmission configuration includes one or more of the following: a waveform, a modulation scheme (for example, a modulation format and/or a modulation order), a quantity of mapping layers, or a code division multiplexing (code division multiplexing, CDM) group configuration.

In the foregoing design, because a PAPR of a DMRS may vary under different DMRS transmission configurations, corresponding power boosting values may be separately configured for the different DMRS transmission configurations, to maintain consistency between nonlinear effects experienced by the DMRS and data, and improve accuracy of nonlinear estimation using the DMRS at a receive end (that is, the second communication apparatus).

In a possible design, a difference between a PAPR of a DMRS and a PAPR of data is in one-to-one correspondence with a power boosting value.

In the foregoing design, considering that both average power and a PAPR affect nonlinear distortion of a signal, a to-be-used power boosting value may be determined based on a difference between a PAPR of a DMRS and a PAPR of data, to maintain consistency between nonlinear effects experienced by the DMRS and the data, and improve accuracy of nonlinear estimation using the DMRS at a receive end.

In a possible design, one difference between a PAPR of a DMRS and a PAPR of data corresponds to a plurality of power boosting values, and determining the first power boosting value includes: sending first information to the second communication apparatus, where the first information indicates a plurality of power boosting values corresponding to the difference between the PAPR of the first DMRS and the PAPR of the data, and time-domain unit positions respectively corresponding to the plurality of power boosting values; for a time-domain unit position corresponding to any one of the plurality of power boosting values, sending test data to the second communication apparatus at the time-domain unit position, and sending a test DMRS to the second communication apparatus at the time-domain unit position based on the power boosting value, where a nonlinear estimation result of the test DMRS is used by the second communication apparatus to perform nonlinear compensation on the test data at the time-domain unit position; and receiving second information from the second communication apparatus, where the second information indicates the first power boosting value, the first power boosting value belongs to the plurality of power boosting values, and the first power boosting value is determined by the second communication apparatus based on transmission performance of the test data received at the time-domain unit positions respectively corresponding to the plurality of power boosting values.

In the foregoing design, a power boosting value may be determined based on a measurement result at a receive end, to further maintain consistency between nonlinear effects experienced by a DMRS and data, and improve accuracy of nonlinear estimation using the DMRS at the receive end.

In a possible design, the method further includes: sending third information to the second communication apparatus, where the third information indicates the first power boosting value.

In the foregoing design, the receive end may learn of a power boosting value used for a DMRS, to avoid the impact on channel estimation using the DMRS at the receive end.

In a possible design, before determining the first power boosting value, the method further includes: receiving fourth information from the second communication apparatus, where the fourth information indicates to enable DMRS power boosting.

In the foregoing design, a transmit end and the receive end may be aligned on an understanding of whether to enable DMRS power boosting, to avoid the impact of power boosting of a DMRS on channel estimation using the DMRS at the receive end.

In a possible design, the fourth information further indicates a sub-time-domain unit position occupied by the first DMRS in a time-domain unit, and sending the first DMRS to the second communication apparatus based on the first power boosting value includes: sending the first DMRS to the second communication apparatus based on the sub-time-domain unit position occupied by the first DMRS in the time-domain unit and the first power boosting value.

In the foregoing design, the transmit end and the receive end may be aligned on a time-domain position of a power-boosted DMRS, to avoid the impact on channel estimation using the DMRS at the receive end.

In a possible design, the first DMRS is generated by modulating a Gold sequence with quadrature phase shift keying (quadrature phase shift keying, QPSK).

In the foregoing design, a DMRS may be generated based on a Gold sequence corresponding to a larger PAPR, so that a power boosting amount required for the DMRS can be reduced without affecting nonlinear estimation at the receive end.

In a possible design, when the first DMRS corresponds to a cyclic prefix orthogonal frequency division multiplexing (cyclic prefix orthogonal frequency division multiplexing, CP-OFDM) waveform across different CDM groups, a DMRS configuration for PAPR reduction is not enabled; or when the first DMRS corresponds to a discrete Fourier transform spread orthogonal frequency division multiplexing (discrete Fourier transform spread orthogonal frequency division multiplexing, DFT-s-OFDM) waveform across different CDM groups, and when a quantity of mapping layers is greater than 1, the different CDM groups correspond to a same DMRS sequence.

The foregoing design helps increase a PAPR of a DMRS, and can reduce a power boosting amount required for the DMRS without affecting nonlinear estimation at the receive end.

In a possible design, a time-domain unit for sending the first DMRS is determined, based on a periodicity, in a time-domain unit for sending the data; or a time-domain unit for sending the first DMRS is each time-domain unit for sending the data.

In the foregoing design, a plurality of manners of sending a DMRS used for nonlinear estimation can be supported, which helps meet requirements for nonlinear estimation in different communication scenarios.

In a possible design, before sending the first DMRS to the second communication apparatus based on the first power boosting value, the method further includes: determining that communication quality with the second communication apparatus is not higher than a communication quality threshold; and/or determining that a request to perform nonlinear estimation has been received from the second communication apparatus.

In the foregoing design, sending of a DMRS for nonlinear estimation based on communication quality and a request of the receive end is supported, which helps improve accuracy of nonlinear compensation on data at the receive end, and improve data transmission performance.

In a possible design, the method further includes: sending a non-power-boosted second DMRS to the second communication apparatus.

In the foregoing design, sending of both a power-boosted DMRS and a non-power-boosted DMRS by the transmit end can be supported for nonlinear estimation and channel estimation at the receive end.

According to a second aspect, an embodiment of this application provides a communication method. The method may be performed by a second communication apparatus, and the method includes: receiving data and a first DMRS from a first communication apparatus, where the first DMRS is sent by the first communication apparatus based on a first power boosting value, and the first power boosting value is determined based on a transmission configuration of the first DMRS and a mapping relationship between a DMRS transmission configuration and a power boosting value, or the first power boosting value is determined based on a difference between a PAPR of the first DMRS and a PAPR of the data; and performing nonlinear compensation on the data based on a nonlinear estimation result obtained based on the first DMRS.

It may be understood that the DMRS (for example, the first DMRS) may also be replaced with a reference signal, and the reference signal may be an uplink reference signal (for example, a DMRS or an SRS), a downlink reference signal (for example, a CRS), a sidelink reference signal, or the like; and the communication method may be used for nonlinear estimation and nonlinear compensation in scenarios such as uplink communication, downlink communication, and sidelink communication.

In the foregoing communication method, the first communication apparatus may be a terminal device, a component (for example, a processor, a chip, or a chip system) of the terminal device, or an apparatus used together with the terminal device; and the second communication apparatus may be a network device, a component (for example, a processor, a chip, or a chip system) of the network device, or an apparatus used together with the network device. Alternatively, the first communication apparatus may be a network device, a component (for example, a processor, a chip, or a chip system) of the network device, or an apparatus used together with the network device; and the second communication apparatus may be a terminal device, a component (for example, a processor, a chip, or a chip system) of the terminal device, an apparatus used together with the terminal device, or the like.

In a possible design, the DMRS transmission configuration includes one or more of the following: a waveform, a modulation scheme, a quantity of mapping layers, or a code division multiplexing CDM group configuration.

In a possible design, a difference between a PAPR of a DMRS and a PAPR of data is in one-to-one correspondence with a power boosting value.

In a possible design, one difference between a PAPR of a DMRS and a PAPR of data corresponds to a plurality of power boosting values, and the method further includes: receiving first information from the first communication apparatus, where the first information indicates a plurality of power boosting values corresponding to the difference between the PAPR of the first DMRS and the PAPR of the data, and time-domain unit positions respectively corresponding to the plurality of power boosting values; for a time-domain unit position corresponding to any one of the plurality of power boosting values, receiving test data and a test DMRS from the first communication apparatus at the time-domain unit position, where the test DMRS is sent by the first communication apparatus based on the power boosting value, and a nonlinear estimation result of the test DMRS is used to perform nonlinear compensation on the test data at the time-domain unit position; and sending second information to the first communication apparatus, where the second information indicates the first power boosting value, the first power boosting value belongs to the plurality of power boosting values, and the first power boosting value is determined based on transmission performance of the test data received at the time-domain unit positions respectively corresponding to the plurality of power boosting values.

In a possible design, the method further includes: receiving third information from the first communication apparatus, where the third information indicates the first power boosting value.

In a possible design, before receiving the data and the first DMRS from the first communication apparatus, the method further includes: sending fourth information to the first communication apparatus, where the fourth information indicates to enable DMRS power boosting.

In a possible design, the fourth information further indicates a sub-time-domain unit position occupied by the first DMRS in a time-domain unit, and receiving the data and the first DMRS from the first communication apparatus includes: receiving the first DMRS from the first communication apparatus based on the sub-time-domain unit position occupied by the first DMRS in the time-domain unit.

In a possible design, the first DMRS is generated by modulating a Gold sequence with QPSK.

In a possible design, when the first DMRS corresponds to a CP-OFDM waveform across different CDM groups, a DMRS configuration for PAPR reduction is not enabled; or when the first DMRS corresponds to a DFT-s-OFDM waveform across different CDM groups, and when a quantity of mapping layers is greater than 1, the different CDM groups correspond to a same DMRS sequence.

In a possible design, the method further includes: performing power reduction on the first DMRS based on the first power boosting value; and performing channel equalization on the data based on a channel estimation result of the power-reduced first DMRS.

In a possible design, the method further includes: receiving a non-power-boosted second DMRS from the first communication apparatus; performing power reduction on the first DMRS based on the first power boosting value; and performing channel equalization on the data based on a channel estimation result of the power-reduced first DMRS and a channel estimation result of the second DMRS.

According to a third aspect, an embodiment of this application provides a communication method. The method may be performed by a first communication apparatus, and the method includes: sending first data and second data to a second communication apparatus, where the first data is determined based on a transmission configuration of the second data and a mapping relationship between a data transmission configuration and predefined data, and a nonlinear estimation result of the first data is used by the second communication apparatus to perform nonlinear compensation on the second data.

In the foregoing communication method, the first communication apparatus may be a terminal device, a component (for example, a processor, a chip, or a chip system) of the terminal device, or an apparatus used together with the terminal device; and the second communication apparatus may be a network device, a component (for example, a processor, a chip, or a chip system) of the network device, or an apparatus used together with the network device. Alternatively, the first communication apparatus may be a network device, a component (for example, a processor, a chip, or a chip system) of the network device, or an apparatus used together with the network device; and the second communication apparatus may be a terminal device, a component (for example, a processor, a chip, or a chip system) of the terminal device, an apparatus used together with the terminal device, or the like.

In this embodiment of this application, predefined data may be used as a signal used for nonlinear estimation, to obtain a nonlinear estimation result the same as that of actual transmitted data (for example, the second data). Therefore, accurate nonlinear compensation is performed on the actual transmitted data, to improve data transmission performance.

In a possible design, the data transmission configuration includes one or more of the following: a waveform, a modulation scheme, or a quantity of mapping layers.

In the foregoing design, data may be separately predefined for different transmission configurations, to ensure that the predefined data and actual transmitted data have a same PAPR under different data transmission configurations, and therefore ensure accurate nonlinear compensation on the actual transmitted data.

In a possible design, before sending the first data and the second data to the second communication apparatus, the method further includes: sending the first data to the second communication apparatus by using a first modulation and coding scheme (modulation and coding scheme, MCS), where the first MCS is higher than a second MCS, and the second MCS is an MCS used to send the first data and the second data to the second communication apparatus.

In the foregoing design, based on a characteristic that a low MCS corresponds to a low modulation order and a low code rate and therefore provides high data transmission reliability, the first data used for nonlinear estimation may be sent to the second communication apparatus, so that the second communication apparatus learns of accurate first data. Therefore, after the first data and the second data that are sent by the first communication apparatus by using a high MCS are received, nonlinear estimation performed based on the accurate first data and the received first data can be supported.

According to a fourth aspect, an embodiment of this application provides a communication method. The method may be performed by a second communication apparatus, and the method includes: receiving first data and second data from a first communication apparatus, where the first data is determined based on a transmission configuration of the second data and a mapping relationship between a data transmission configuration and predefined data; and performing nonlinear compensation on the second data based on a nonlinear estimation result of the first data.

In the foregoing communication method, the first communication apparatus may be a terminal device, a component (for example, a processor, a chip, or a chip system) of the terminal device, or an apparatus used together with the terminal device; and the second communication apparatus may be a network device, a component (for example, a processor, a chip, or a chip system) of the network device, or an apparatus used together with the network device. Alternatively, the first communication apparatus may be a network device, a component (for example, a processor, a chip, or a chip system) of the network device, or an apparatus used together with the network device; and the second communication apparatus may be a terminal device, a component (for example, a processor, a chip, or a chip system) of the terminal device, an apparatus used together with the terminal device, or the like.

In a possible design, the data transmission configuration includes one or more of the following: a waveform, a modulation scheme, or a quantity of mapping layers.

In a possible design, before receiving the first data and the second data from the first communication apparatus, the method further includes: receiving the first data sent by the first communication apparatus by using a first MCS, where the first MCS is higher than a second MCS, and the second MCS is an MCS used by the first communication apparatus to send the first data and the second data.

According to a fifth aspect, an embodiment of this application provides a communication apparatus. The apparatus has a function of implementing the method according to the first aspect, the second aspect, the third aspect, or the fourth aspect. The function may be implemented by hardware, or may be implemented by hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a memory and a processor. The memory is configured to store instructions executed by the processor. When the instructions are executed by the processor, the apparatus may perform the method according to the first aspect, the second aspect, the third aspect, or the fourth aspect.

According to a sixth aspect, an embodiment of this application provides a communication apparatus. The communication apparatus includes an interface circuit and a processor, and the processor and the interface circuit are coupled to each other. The processor is configured to implement, through a logic circuit or by executing instructions, the method according to the first aspect, the second aspect, the third aspect, or the fourth aspect. The interface circuit is configured to: receive a signal from a communication apparatus other than the communication apparatus and transmit the signal to the processor, or send a signal from the processor to a communication apparatus other than the communication apparatus. It may be understood that the interface circuit may be a transceiver, a transceiver device, a transceiver apparatus, or an input/output interface.

Optionally, the communication apparatus may further include a memory, configured to: store instructions executed by the processor, or store input data required for running instructions by the processor, or store data generated after the processor runs instructions. The memory may be a physically independent unit, or may be coupled to the processor, or the processor includes the memory (that is, the processor and the memory are integrated).

In a possible implementation, the communication apparatus is a chip.

According to a seventh aspect, an embodiment of this application provides a communication system. The communication system includes a first communication apparatus and a second communication apparatus. The first communication apparatus may implement the method according to the first aspect, and the second communication apparatus may implement the method according to the second aspect. Alternatively, the first communication apparatus may implement the method according to the third aspect, and the second communication apparatus may implement the method according to the fourth aspect.

According to an eighth aspect, an embodiment of this application provides a computer-readable storage medium. The computer-readable storage medium stores a computer program or instructions. When the computer program or the instructions are executed by a processor, the method according to the first aspect, the second aspect, the third aspect, or the fourth aspect can be implemented.

According to a ninth aspect, an embodiment of this application further provides a computer program product, including a computer program or instructions. When the computer program or the instructions are executed by a processor, the method according to the first aspect, the second aspect, the third aspect, or the fourth aspect can be implemented.

According to a tenth aspect, an embodiment of this application further provides a chip system. The chip system includes a processor and an interface. The processor is configured to invoke instructions from the interface and execute the instructions. When the processor executes the instructions, the method according to the first aspect, the second aspect, the third aspect, or the fourth aspect can be implemented.

For technical effects that can be achieved in the second aspect and the fourth aspect to the tenth aspect, refer to the technical effects that can be achieved in the first aspect or the third aspect. Details are not described herein again.

### BRIEF DESCRIPTION OF DRAWINGS

FIG. 1 is a diagram of an architecture of a communication system according to an embodiment of this application;
FIG. 2 is a diagram of an application scenario according to an embodiment of this application;
FIG. 3 is a diagram of nonlinearity of a power amplifier according to an embodiment of this application;
FIG. 4 is a diagram of a basic principle of a pre-distortion technology according to an embodiment of this application;
FIG. 5 is a diagram 1 of DMRS distribution according to an embodiment of this application;
FIG. 6 is a diagram of CDM groups according to an embodiment of this application;
FIG. 7A to FIG. 7D are diagrams of DMRS power boosting according to an embodiment of this application;
FIG. 8 is a diagram of a cause of an increase in a PAPR of a DMRS according to an embodiment of this application;
FIG. 9 is a diagram 1 of a communication method according to an embodiment of this application;
FIG. 10 is a diagram of determining a first power boosting value according to an embodiment of this application;
FIG. 11 is a diagram 2 of a communication method according to an embodiment of this application;
FIG. 12 is a diagram 3 of a communication method according to an embodiment of this application;
FIG. 13 is a diagram 4 of a communication method according to an embodiment of this application;
FIG. 14 is a diagram 5 of a communication method according to an embodiment of this application;
FIG. 15 is a diagram 1 of a structure of a communication apparatus according to an embodiment of this application; and
FIG. 16 is a diagram 2 of a structure of a communication apparatus according to an embodiment of this application.

### DESCRIPTION OF EMBODIMENTS

Technical solutions in embodiments of this application may be applied to various communication systems, for example, a long term evolution (long term evolution, LTE) system, an LTE-advanced (LTE-advanced, LTE-A) system, a universal mobile telecommunications system (universal mobile telecommunications system, UMTS), a 5th generation (5th generation, 5G) mobile communication system, a beyond 5G (beyond 5G, B5G) mobile communication system, or a communication system evolved beyond 5G (for example, a 6G mobile communication system). The communication system may alternatively be a device-to-device (device-to-device, D2D) network, a Wi-Fi network, a machine-to-machine (machine-to-machine, M2M) network, an internet of things (internet of things, IoT) network, or another network.

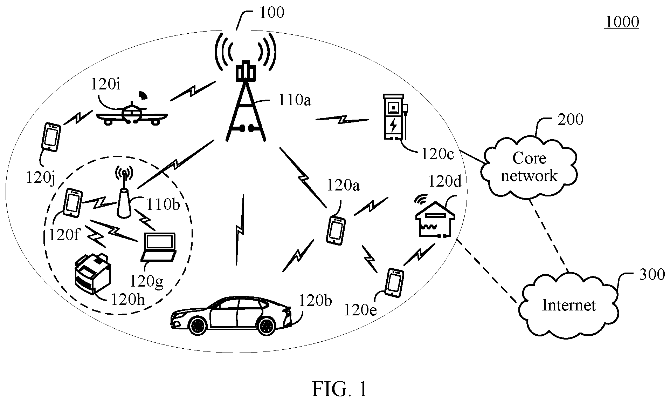

An architecture of a communication system to which embodiments of this application are applied may be shown in FIG. 1. The communication system 1000 includes a radio access network (radio access network, RAN) 100 and a core network (core network, CN) 200. Optionally, the communication system 1000 may further include an internet 300. The RAN 100 includes at least one network device (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal device 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G system, a 5G system, or a system evolved beyond 5G (for example, a 6G mobile communication system). The RAN 100 may alternatively be an open radio access network (open RAN, O-RAN or ORAN), a cloud radio access network (cloud radio access network, CRAN), or a Wi-Fi system. The RAN 100 may alternatively be a communication system that integrates two or more of the foregoing systems.

An apparatus provided in embodiments of this application may be used in the network device 110 or the terminal device 120. It may be understood that FIG. 1 shows only a possible architecture of the communication system to which embodiments of this application may be applied. In another possible scenario, the architecture of the communication system may alternatively include another device.

The network device 110 is a node in the radio access network (radio access network, RAN), and may also be referred to as an access network device or a RAN node (or device). The network device 110 is configured to help the terminal device implement wireless access. A plurality of network devices 110 in the communication system 1000 may be nodes of a same type, or may be nodes of different types. In some scenarios, roles of the network device 110 and the terminal device 120 are relative. For example, a network element 120i in FIG. 1 may be a helicopter or an uncrewed aerial vehicle, and may be configured as a mobile base station. For a terminal device 120j that accesses the RAN 100 through the network element 120i, the network element 120i is a base station. However, for the base station 110a, the network element 120i is a terminal device. The network device 110 and the terminal device 120 are sometimes referred to as communication apparatuses. For example, network elements 110a and 110b in FIG. 1 may be understood as communication apparatuses having a base station function, and network elements 120a to 120j may be understood as communication apparatuses having a terminal device function.

In a possible scenario, the network device may be a base station (base station, BS), an evolved NodeB (evolved NodeB, eNodeB), a transmission reception point (transmission reception point, TRP), a transmission point (transmission point, TP), a next generation NodeB (next generation NodeB, gNB), a base station in a future mobile communication system, a satellite, an access point (access point, AP) in a Wi-Fi system, an integrated access and backhaul (integrated access and backhaul, IAB) node, a mobile switching center, or a network device in a non-terrestrial network (non-terrestrial network, NTN) communication system, that is, a device that may be deployed on a high-altitude platform, a satellite, or the like. The network device may be a macro base station (for example, 110a in FIG. 1), a micro base station or an indoor station (for example, 110b in FIG. 1), a relay node or a donor node, or a radio controller in a CRAN scenario. The network device may alternatively be a device that functions as a base station in device-to-device (device-to-device, D2D) communication, internet of vehicles communication, uncrewed aerial vehicle communication, or machine communication. Optionally, the network device may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of network devices collaborate to assist a terminal device in implementing wireless access, and different network devices separately implement parts of functions of a base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna processing unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP and the CU-UP), the DU, and the RU in this application may be implemented by using a software module, a hardware module, or a combination of a software module and a hardware module.

A form of the network device is not limited in embodiments of this application. An apparatus configured to implement a function of the network device may be a network device, or may be an apparatus, for example, a chip system, that can support the network device in implementing the function. The apparatus may be installed in the network device or used together with the network device.

The terminal device 120 may also be referred to as a terminal, user equipment (user equipment, UE), a mobile station (mobile station, MS), a mobile terminal (mobile terminal, MT), or the like, and may be a device configured to provide voice or data connectivity for a user, or may be an internet of things device or a station (station, STA) in a Wi-Fi system. For example, the terminal device includes a hand-held device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, a pedometer, or smart glasses), a vehicle-mounted device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer premises equipment (customer premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal in D2D communication.

A device form of the terminal device is not limited in embodiments of this application. An apparatus configured to implement a function of the terminal device may be a terminal device, or may be an apparatus, for example, a chip system, that can support the terminal device in implementing the function. The apparatus may be installed in the terminal device or used together with the terminal device. In embodiments of this application, the chip system may include a chip, or may include a chip and another discrete component.

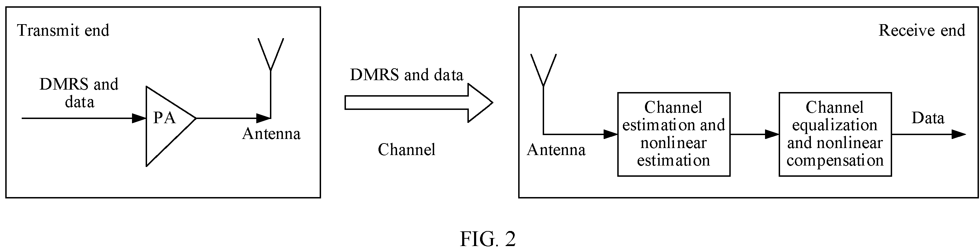

Based on the architecture of the communication system shown in FIG. 1, FIG. 2 shows an example of an application scenario to which embodiments of this application are applicable. The application scenario includes a transmit end and a receive end. The transmit end may be the terminal device in FIG. 1, and the receive end may be the network device in FIG. 1; or the transmit end may be the network device in FIG. 1, and the receive end may be the terminal device in FIG. 1.

When passing through a PA, a DMRS and data (that is, signals corresponding to the DMRS and the data) that are sent by the transmit end experience nonlinear effects when input power is high, causing signal distortion. The signals may be sent to an air interface through an antenna after passing through the PA. The signals (corresponding to the DMRS and the data) sent by the transmit end arrive at an antenna of the receive end after being transmitted through a channel, and are converted into baseband signals. Then, the receive end may use the DMRS (that is, a signal corresponding to the DMRS) for channel estimation and nonlinear estimation, and perform channel equalization and nonlinear compensation on the transmitted data (that is, a signal corresponding to the data) by using an obtained estimation result, to obtain data with channel interference and nonlinear distortion removed.

For ease of understanding by a person skilled in the art, the following explains and describes some terms in this application.

### (1) PA and nonlinearity

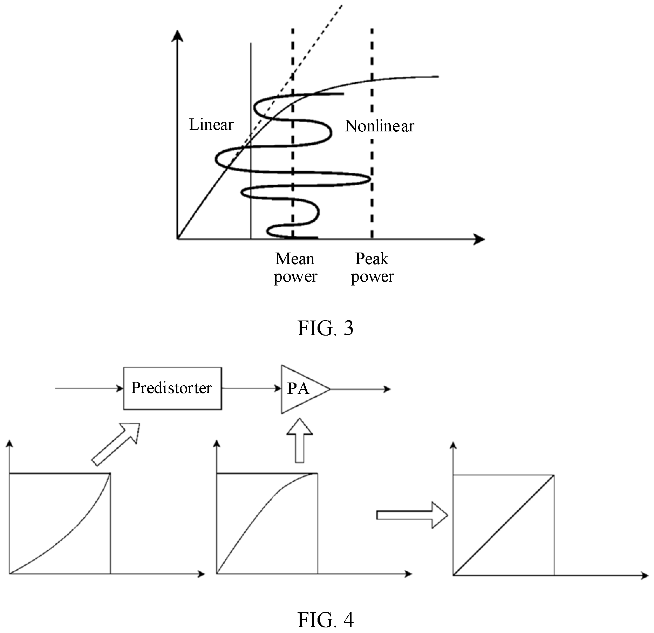

The PA converts a low-power signal into a higher-power signal in a transmitter, to overcome signal attenuation between the transmitter and a receiver and ensure that the receiver can receive a sufficiently strong signal. A core semiconductor device of the PA is a transistor, and has a nonlinear characteristic. Therefore, the PA cannot maintain ideal linearity expected by the transmitter. The nonlinear characteristic causes the power amplifier to generate harmonic and intermodulation distortion. Such distortion may degrade system transmission performance, leading to out-of-band radiation interference, increased bit error rate, and degraded EVM performance. Refer to FIG. 3, that is, a diagram of nonlinearity of a PA. A horizontal axis represents input power, and a vertical axis represents output power. As the input power increases, a relationship between the input power and the output power is no longer linear. Therefore, when the input power increases, a signal sent through the PA experiences a nonlinear effect, causing nonlinear distortion of the signal.

Both average power (namely, mean power) and a PAPR of the signal affect nonlinear distortion of the signal. Reducing the average power of the PA input signal helps alleviate nonlinear distortion, but reduces system energy efficiency. The PAPR is a ratio of peak power to the average power of the signal. Under same average power, a larger PAPR indicates higher peak power and more severe nonlinear distortion. To overcome attenuation and support a long transmission distance, the PA needs to transmit a high-power signal, which causes nonlinear distortion. Therefore, a linearization technology is required to mitigate impact of nonlinear distortion.

### (2) Pre-distortion

Because both an increase in average power and an increase in a PAPR cause more severe nonlinear distortion of a PA, a linearization technology needs to be used for compensation and for improvement of linearity of the power amplifier, to enable the linearity to meet a requirement of a linearity indicator of a transmitter. In a plurality of linearization technologies such as a feedforward technology and a pre-distortion technology, a pre-distortion architecture develops rapidly and is widely applied due to advantages such as simplicity and accuracy of the pre-distortion architecture. A basic principle of the pre-distortion technology is shown in FIG. 4. A predistorter (predistorter) performs nonlinear processing on a PA input signal in advance by extracting an inverse characteristic of a nonlinear characteristic of the PA, to finally obtain a linear output of a cascaded system. A structure of the predistorter may be analog pre-distortion or digital pre-distortion (digital pre-distortion, DPD). Analog pre-distortion is mainly applied to nonlinear compensation for conventional power amplifiers with substantially no memory effect. During actual application, accuracy of analog pre-distortion can hardly meet a requirement of high-order modulation, and therefore analog pre-distortion is not directly applicable. Digital pre-distortion is widely applied to PA linearization technologies due to high accuracy and flexible configurability of digital pre-distortion. However, due to a limitation on maximum power at a transmit end, when average power is high, nonlinear distortion cannot be completely removed. Therefore, to improve transmission efficiency, nonlinear distortion needs to be further removed at a receive end.

### (3) Receive-end linearization algorithm

A principle of the receive-end linearization algorithm is similar to that of DPD. DPD is equivalent to adding a distortion cancellation function before the input, while the receive-end linearization algorithm is to add a distortion cancellation function after a distorted signal is received. A difference lies in that for DPD, at a transmit end, a nonlinear distortion function and a corresponding DPD function can be calculated through feedback by a feedback circuit; and on a receive side, nonlinear distortion can only be estimated by using a DMRS (because a signal needs to pass through a channel and the DMRS is the only known signal). Therefore, it is necessary to ensure that the DMRS and data experience same nonlinear effects, to ensure accuracy of result estimation.

### (4) DMRS

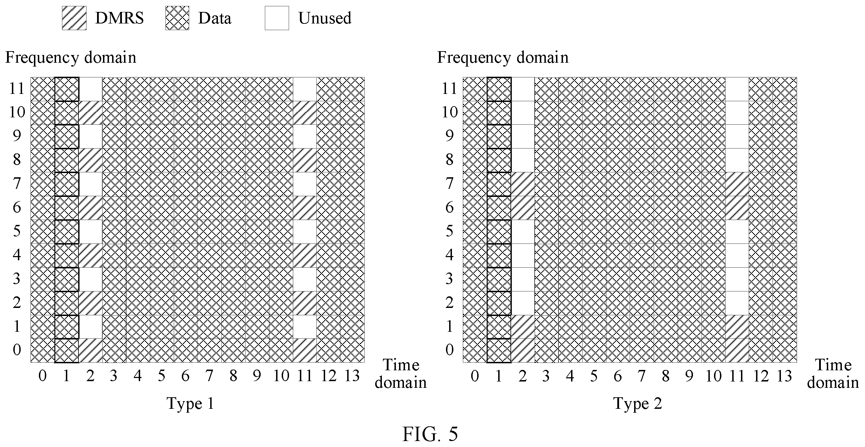

In a current communication technology, the DMRS is mainly used for channel estimation and equalization at a receive end, that is, used for uplink and downlink data demodulation. In time domain, there are two types of DMRS mapping: a type (type) A and a type (type) B. The type A and the type B define positions of a start symbol occupied by the DMRS in a slot (slot). For the type A, the start symbol occupied by the DMRS is a symbol 2 or a symbol 3 in the slot (slot), and is not related to a start position of data transmission. For the type B, the start symbol occupied by the DMRS is not defined relative to the slot, but is a 1^{st} symbol of a data transmission resource in the slot. For example, the 1^{st} symbol of the data transmission resource is a symbol 8 in the slot, and the start symbol occupied by the DMRS is the symbol 8 in the slot. In frequency domain, there are two types of DMRS mapping: a type 1 and a type 2. Refer to FIG. 5. For arrangement manners of the type 1 and the type 2, type 1 DMRS resource elements (resource elements, REs) are arranged at intervals in frequency domain, and therefore a density is 50%; and type 2 DMRS REs are arranged in pairs with an interval of four REs between adjacent pairs, and therefore a density is 33.3%.

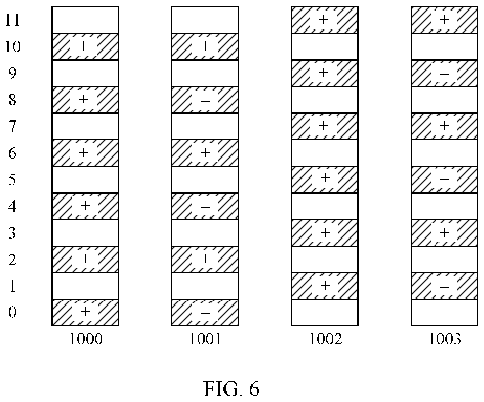

The concept of a code division multiplexing (code division multiplexing, CDM) group (group) is introduced. When different antenna ports occupy a same time-frequency resource for DMRSs, DMRS orthogonality can be implemented in a code division multiplexing manner. DMRSs occupying a same time-frequency resource belong to a same CDM group, and DMRSs occupying different time-frequency resources belong to different CDM groups. An example in which DMRS orthogonality is implemented by using orthogonal cover codes (orthogonal cover codes, OCCs) is used. FIG. 6 shows an example of OCCs corresponding to four different ports under a single-symbol type 1 DMRS configuration. A vertical axis represents frequency domain, a shadow part represents a frequency-domain resource occupied by a DMRS port, + represents +1, - represents -1, a CDM type is CDM2, a DMRS port 1000 (OCCs are +1, +1, +1, +1 +1, and +1) and a DMRS port 1001 (OCCs are -1, +1, -1, +1, -1, and +1) occupy same frequency-domain resources and belong to a same CDM group, and a DMRS port 1002 (OCCs are +1, +1, +1, +1, +1, and +1) and a DMRS port 1003 (OCCs are -1, +1, -1, +1, -1, and +1) belong to another CDM group.

### (5) DMRS power change and PAPR change

For the DMRS power change, currently, 3GPP has defined the following: when a DMRS and data are not multiplexed in time domain (for example, on a symbol), power boosting (boosting) may be performed on the DMRS, to maintain consistent average power per RE between a symbol for sending the DMRS and a symbol for sending the data. A parameter "number of DMRS CDM groups without data (Number of DMRS CDM groups without data)" determines whether the DMRS and the data are multiplexed on a same symbol. The parameter may be configured based on scheduling information of downlink control information (downlink control information, DCI). A value of "number of DMRS CDM groups without data" may be 1, 2, or 3, and the three values correspond to three different DMRS configurations, that is, correspond to three different power boosting (power boosting) values.

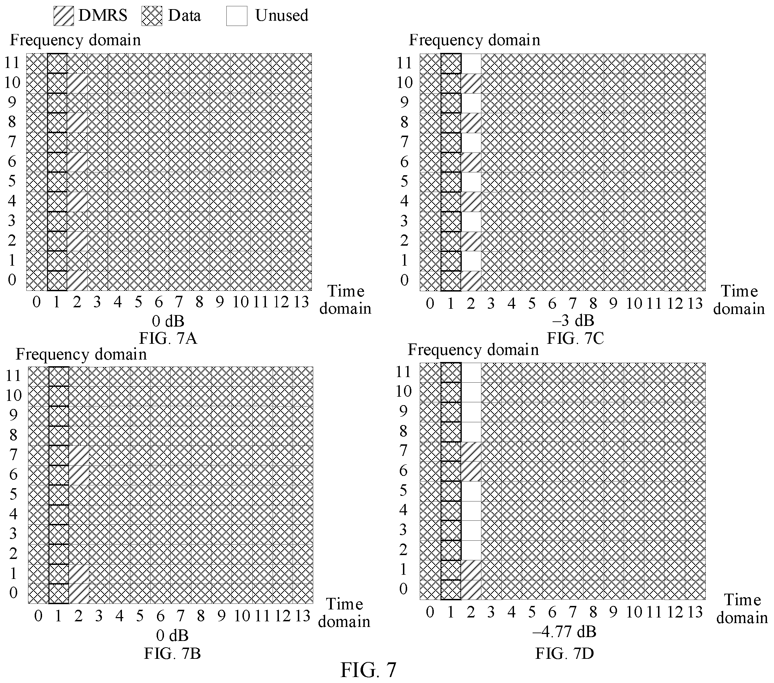

In an example, reference may be made to FIG. 7A to FIG. 7D, that is, diagrams of DMRS power boosting: For DMRS and data distribution shown in FIG. 7A and FIG. 7B, the DMRS and the data are multiplexed on a same symbol (for example, a symbol 2), and consistent average power per RE is maintained between the symbol for sending the DMRS and the symbol for sending the data. Therefore, power boosting does not need to be performed on the DMRS, that is, a power boosting value is 0 dB. For DMRS and data distribution shown in FIG. 7C, the DMRS and the data are not multiplexed on a same symbol, and because on a symbol (a symbol 2) on which the DMRS is located, there are REs that are not used to send the DMRS or the data, average power per RE on the symbol (for example, the symbol 2) for sending the DMRS is lower than average power per RE on the symbol (for example, a symbol 3 or a symbol 4) for sending the data. Therefore, transmit power boosting needs to be performed on the DMRS, and a boosting value may be -3 dB. For DMRS and data distribution shown in FIG. 7D, the DMRS and the data are not multiplexed on a same symbol, and because on a symbol (a symbol 2) on which the DMRS is located, there are REs that are not used to send the DMRS or the data, average power per RE on the symbol (for example, the symbol 2) for sending the DMRS is lower than average power per RE on the symbol (for example, a symbol 3 or a symbol 4) for sending the data. Therefore, transmit power boosting needs to be performed on the DMRS, and a boosting value may be -4.77 dB. The power boosting value may be determined based on a ratio of energy per resource element (energy per resource element, EPRE) on the symbol for sending the data to EPRE on the symbol for sending the DMRS. Through the foregoing processing, average power per symbol of the DMRS and average power per symbol of the data are consistent. In other words, average power on the symbol for sending the DMRS is equal to average power on the symbol for sending the data.

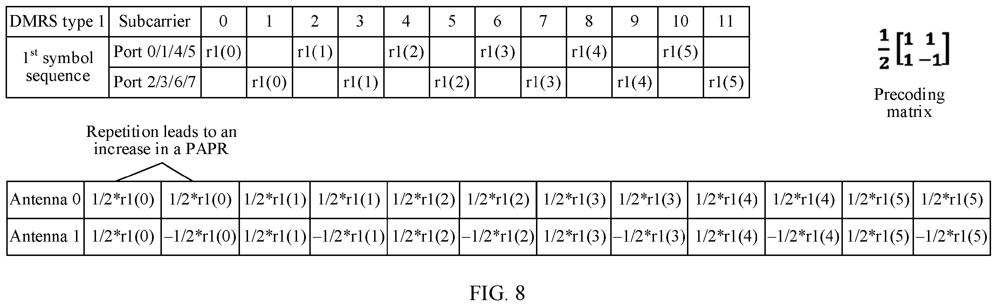

For the PAPR change, a configuration for DMRS PAPR reduction is added in the 3GPP Release 16. Refer to FIG. 8. For DMRSs with a CP-OFDM waveform, because a same sequence is used for antenna ports corresponding to different CDM groups, after precoding matrix processing is applied to the antenna ports corresponding to the different CDM groups, a PAPR is high (a PAPR of the DMRS is high due to sequence repetition). Therefore, an R16-lowPAPR DMRS (lowPAPR DMRS) configuration is added to reduce the PAPR. The R16-lowPAPR DMRS configuration may also be referred to as a DMRS configuration for PAPR reduction, and the PAPR can be reduced by avoiding sequence repetition.

Currently, because a PAPR of a DMRS is inconsistent with a PAPR of data, even if average power on a symbol for sending the DMRS is consistent with average power on a symbol for sending the data, the DMRS and the data experience inconsistent nonlinear effects. Consequently, a receive end cannot use a nonlinear estimation result of the DMRS to perform accurate nonlinear compensation on the data, and even data transmission performance after nonlinear compensation is degraded compared with that without nonlinear compensation.

In view of this, embodiments of this application provide a communication method and apparatus, to improve data transmission performance. The following describes in detail embodiments of this application with reference to accompanying drawings.

In addition, it should be understood that ordinal numbers such as "first" and "second" mentioned in embodiments of this application are used to distinguish between a plurality of objects, and are not intended to limit sizes, content, a sequence, a time sequence, priorities, importance, or the like of the plurality of objects. For example, a first DMRS and a second DMRS do not indicate that the two DMRSs correspond to different priorities, importance, or the like.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between associated objects. For example, A/B indicates A or B. "At least one of the following items (pieces)" or a similar expression thereof refers to any combination of these items, including any combination of singular items (pieces) or plural items (pieces). For example, at least one of a, b, or c represents: a, b, c, a and b, a and c, b and c, or a, b, and c, where a, b, and c may be singular or plural.

The communication method provided in embodiments of this application may be performed by a first communication apparatus and a second communication apparatus. The first communication apparatus may be a terminal device, a component (for example, a processor, a chip, or a chip system) of the terminal device, or an apparatus used together with the terminal device; and the second communication apparatus may be a network device, a component (for example, a processor, a chip, or a chip system) of the network device, or an apparatus used together with the network device. Alternatively, the first communication apparatus may be a network device, a component (for example, a processor, a chip, or a chip system) of the network device, or an apparatus used together with the network device; and the second communication apparatus may be a terminal device, a component (for example, a processor, a chip, or a chip system) of the terminal device, an apparatus used together with the terminal device, or the like.

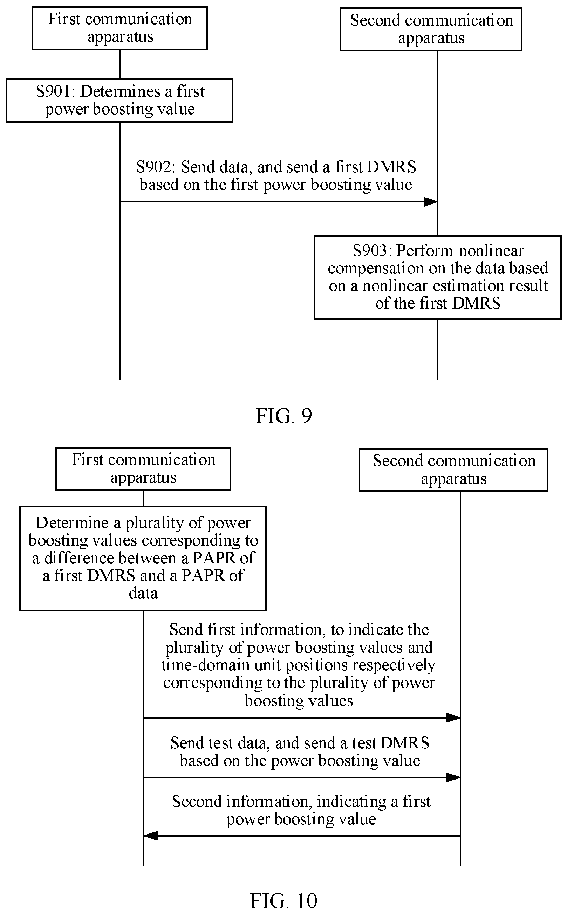

FIG. 9 is a diagram of a communication method according to an embodiment of this application. The method includes the following steps.

S901: A first communication apparatus determines a first power boosting value.

The first power boosting value may be determined based on a transmission configuration of a first DMRS and a mapping relationship between a DMRS transmission configuration and a power boosting value, or the first power boosting value may be determined based on a difference between a PAPR of the first DMRS and a PAPR of data. The first DMRS is a DMRS that can be used for nonlinear estimation, in other words, a DMRS for which power boosting is to be performed.

Both average power and a PAPR affect nonlinear distortion of a signal. Therefore, in this embodiment of this application, when a PAPR of a DMRS is lower than a PAPR of data, power boosting (power boosting) may be used for the DMRS to increase average transmit power of the DMRS, to ensure that the DMRS and the data experience same nonlinear effects, and support using a nonlinear estimation result of the DMRS to perform nonlinear compensation on the data.

In addition, in this embodiment of this application, a first power boosting value for performing power boosting on the DMRS may be determined based on that average power per symbol of the DMRS (for example, the first DMRS) and average power per symbol of the data are consistent (for example, average power on a symbol for sending the DMRS is consistent with average power on a symbol for sending the data). For example, when the DMRS (for example, the first DMRS) and the data are not multiplexed in time domain (for example, on a symbol), power boosting may be performed on the DMRS based on a power boosting value corresponding to a parameter "CDM group without data", to enable the average power per symbol of the DMRS and the average power per symbol of the data to be consistent, and then the first power boosting value for performing power boosting on the DMRS is determined.

Specifically, the power boosting value for performing power boosting on the DMRS (for example, the first DMRS) may be determined in the following implementations.

Implementation 1: Considering that a PAPR of a DMRS varies under different DMRS transmission configurations, the mapping relationship between a DMRS transmission configuration and a power boosting value may be pre-configured. For the first DMRS for which power boosting is to be performed, the first communication apparatus may use, based on the transmission configuration of the first DMRS and the mapping relationship between a DMRS transmission configuration and a power boosting value, a power boosting value mapped to the transmission configuration of the first DMRS as the first power boosting value. The DMRS transmission configuration includes one or more of a waveform, a modulation scheme (for example, a modulation format and/or a modulation order), a quantity of mapping layers, a CDM group configuration, and the like.

It should be noted that pre-configuration herein may refer to predefinition in a communication system (for example, the mapping relationship between a DMRS transmission configuration and a power boosting value is predefined in the communication system), predefinition in a communication protocol (for example, the mapping relationship between a DMRS transmission configuration and a power boosting value is predefined in the communication protocol), pre-configuration in a communication apparatus before delivery (for example, the mapping relationship between a DMRS transmission configuration and a power boosting value is pre-configured in the first communication apparatus before delivery), and the like.

The mapping relationship between a DMRS transmission configuration and a power boosting value may be represented in a form of a table, a formula, or the like. A specific representation form of the mapping relationship between a DMRS transmission configuration and a power boosting value is not limited in this embodiment of this application.

In an example, when average power of a DMRS on a symbol is the same as average power of data on a symbol, the mapping relationship between a DMRS transmission configuration and a power boosting value may be shown in Table 1 or Table 2.

**Table 1**

| | Same CDM group for layer=1 and layer≠1 | Different CDM groups | Different CDM groups, R16 low-PAPR DMRS not configured |
|---|---|---|---|
| DMRS type 1 | 2 dB | 1.5 dB | 0 dB |
| DMRS type 2 | 2.5 dB | 2 dB | 0.5 dB |

Table 1 shows an example of a mapping relationship under a CP-OFDM waveform. For the DMRS type 1, if the DMRS uses a same CDM group regardless of whether a quantity of mapping layers (layer) is equal to 1 or not equal to 1, a power boosting value is 2 dB; if the DMRS uses different CDM groups, a power boosting value is 1.5 dB; or if the DMRS uses different CDM groups and R16 low-PAPR DMRS is not configured, a power boosting value is 0 dB. For the DMRS type 2, if the DMRS uses a same CDM group regardless of whether a quantity of mapping layers is equal to 1 or not equal to 1, a power boosting value is 2.5 dB; if the DMRS uses different CDM groups, a power boosting value is 2 dB; or if the DMRS uses different CDM groups and R16 low-PAPR DMRS is not configured, a power boosting value is 0.5 dB. That R16 low-PAPR DMRS is not configured may also be replaced with that R16 low-PAPR DMRS is not enabled (or used) or the like.

**Table 2**

| | layer=1, DMRS type 1 | layer=1, DMRS type 2 |
|---|---|---|
| QPSK | 1 dB | 1.5 dB |
| 16QAM | 1.5 dB | 2 dB |

| | layer=1, DMRS type 1 | layer=1, DMRS type 2 |
|---|---|---|
| 64QAM | 1.5 dB | 2 dB |
| 256QAM | 2 dB | 2.5 dB |
| 1024QAM | 2 dB | 2.5 dB |
| 4096QAM | 2.5 dB | 3 dB |

Table 2 shows an example of a mapping relationship under a DFT-s-OFDM waveform. For a quantity of mapping layers (layer) equal to 1 and the DMRS type 1, if a modulation scheme is quadrature phase shift keying (quadrature phase shift keying, QPSK), a power boosting value is 1 dB; if a modulation scheme is 16 quadrature amplitude modulation (quadrature amplitude modulation, QAM), a power boosting value is 1.5 dB; if a modulation scheme is 64QAM, a power boosting value is 1.5 dB; if a modulation scheme is 256QAM, a power boosting value is 2 dB; if a modulation scheme is 1024QAM, a power boosting value is 2 dB; or if a modulation scheme is 4096QAM, a power boosting value is 2.5 dB. For a quantity of mapping layers (layer) equal to 1 and the DMRS type 2, if a modulation scheme is QPSK, a power boosting value is 1.5 dB; if a modulation scheme is 16QAM, a power boosting value is 2 dB; if a modulation scheme is 64QAM, a power boosting value is 2 dB; if a modulation scheme is 256QAM, a power boosting value is 2.5 dB; if a modulation scheme is 1024QAM, a power boosting value is 2.5 dB; or if a modulation scheme is 4096QAM, a power boosting value is 3 dB.

It should be noted that Table 1 and Table 2 are merely examples of the mapping relationship between a DMRS transmission configuration and a power boosting value. During specific application, all or a part of the mapping relationships between a DMRS transmission configuration and a power boosting value in Table 1 and Table 2 may be used, or all or a part of the mapping relationships between a DMRS transmission configuration and a power boosting value in Table 1 and Table 2 may be combined with another mapping relationship between a DMRS transmission configuration and a power boosting value, or a mapping relationship between a DMRS transmission configuration and a power boosting value that is different from those in Table 1 and Table 2 may be used. This is not limited in this application.

Implementation 2: Because both average power and a PAPR affect nonlinear distortion of a signal, a correspondence between a power boosting value and a difference between a PAPR of a DMRS and a PAPR of data may be further pre-configured, where the difference between the PAPR of the DMRS and the PAPR of the data may be in one-to-one correspondence with the power boosting value. The first communication apparatus may further determine the first power boosting value based on the difference between the PAPR of the first DMRS and the PAPR of the data.

It should be noted that pre-configuration herein may refer to predefinition in a communication system, predefinition in a communication protocol, pre-configuration in a communication apparatus before delivery, or the like. The difference between the PAPR of the DMRS (for example, the first DMRS) and the PAPR of the data herein may be a value obtained by subtracting the PAPR of the data from the PAPR of the DMRS, or may be a value obtained by subtracting the PAPR of the DMRS from the PAPR of the data. This is not limited in this application.

The correspondence between a power boosting value and a difference between a PAPR of a DMRS and a PAPR of data (the difference is in one-to-one correspondence with the boosting value) may be represented in a form of a table, a formula, or the like. For example, the correspondence between a power boosting value and a difference between a PAPR of a DMRS and a PAPR of data may be shown in Table 3. If a difference between a PAPR of a DMRS and a PAPR of data is 0 dB to 0.5 dB, a corresponding power boosting value is 0 dB; if a difference between a PAPR of a DMRS and a PAPR of data is 0.5 dB to 1 dB, a corresponding power boosting value is 0.5 dB; if a difference between a PAPR of a DMRS and a PAPR of data is 1 dB to 2 dB, a corresponding power boosting value is 1 dB; if a difference between a PAPR of a DMRS and a PAPR of data is 2 dB to 3 dB, a corresponding power boosting value is 1.5 dB; or if a difference between a PAPR of a DMRS and a PAPR of data is 3 dB to 5 dB, a corresponding power boosting value is 2 dB.

**Table 3**

| Difference between a PAPR of a DMRS and a PAPR of data | Power boosting value |
|---|---|
| 0 dB to 0.5 dB | 0 dB |
| 0.5 dB to 1 dB | 0.5 dB |
| 1 dB to 2 dB | 1 dB |
| 2 dB to 3 dB | 1.5 dB |
| 3 dB to 5 dB | 2 dB |

It should be noted that Table 3 is merely an example of the correspondence between a power boosting value and a difference between a PAPR of a DMRS and a PAPR of data (the difference is in one-to-one correspondence with the boosting value). During specific application, all or a part of the correspondence between a power boosting value and a difference between a PAPR of a DMRS and a PAPR of data in Table 3 may be used, or all or a part of the correspondence between a power boosting value and a difference between a PAPR of a DMRS and a PAPR of data in Table 3 may be combined with another correspondence between a power boosting value and a difference between a PAPR of a DMRS and a PAPR of data, or a correspondence between a power boosting value and a difference between a PAPR of a DMRS and a PAPR of data that is different from that in Table 3 may be used. This is not limited in this application.

Implementation 3: Because both average power and a PAPR affect nonlinear distortion of a signal, a correspondence between a power boosting value and a difference between a PAPR of a DMRS and a PAPR of data may be further pre-configured, where one difference between a PAPR of a DMRS and a PAPR of data may correspond to a plurality of power boosting values. The first communication apparatus may determine the first power boosting value based on the difference between the PAPR of the first DMRS and the PAPR of the data.

The correspondence between a power boosting value and a difference between a PAPR of a DMRS and a PAPR of data (one difference corresponds to a plurality of power boosting values) may be represented in a form of a table, a formula, or the like. For example, the correspondence between a power boosting value and a difference between a PAPR of a DMRS and a PAPR of data may be shown in Table 4. If a difference between a PAPR of a DMRS and a PAPR of data is 0 dB to 0.5 dB, a corresponding power boosting value is 0 dB; if a difference between a PAPR of a DMRS and a PAPR of data is 0.5 dB to 1 dB, corresponding power boosting values are 0.5 dB and 1 dB; if a difference between a PAPR of a DMRS and a PAPR of data is 1 dB to 2 dB, corresponding power boosting values are 0.5 dB, 1 dB, and 1.5 dB; if a difference between a PAPR of a DMRS and a PAPR of data is 2 dB to 3 dB, corresponding power boosting values are 1 dB, 1.5 dB, and 2 dB; or if a difference between a PAPR of a DMRS and a PAPR of data is 3 dB to 5 dB, corresponding power boosting values are 1.5 dB, 2 dB, and 2.5 dB.

**Table 4**

| Difference between a PAPR of a DMRS and a PAPR of data | Power boosting value |
|---|---|
| 0 dB to 0.5 dB | 0 dB |
| 0.5 dB to 1 dB | 0.5 dB, 1 dB |
| 1 dB to 2 dB | 0.5 dB, 1 dB, 1.5 dB |
| 2 dB to 3 dB | 1 dB, 1.5 dB, 2 dB |
| 3 dB to 5 dB | 1.5 dB, 2 dB, 2.5 dB |

It should be noted that Table 4 is merely an example of the correspondence between a power boosting value and a difference between a PAPR of a DMRS and a PAPR of data (one difference corresponds to a plurality of boosting values). During specific application, all or a part of the correspondence between a power boosting value and a difference between a PAPR of a DMRS and a PAPR of data in Table 4 may be used, or all or a part of the correspondence between a power boosting value and a difference between a PAPR of a DMRS and a PAPR of data in Table 4 may be combined with another correspondence between a power boosting value and a difference between a PAPR of a DMRS and a PAPR of data, or a correspondence between a power boosting value and a difference between a PAPR of a DMRS and a PAPR of data that is different from that in Table 4 may be used. This is not limited in this application.

In an example, with reference to FIG. 10, the first communication apparatus may determine, based on the correspondence between a power boosting value and a difference between a PAPR of a DMRS and a PAPR of data (one difference corresponds to a plurality of power boosting values), a plurality of power boosting values corresponding to the difference between the PAPR of the first DMRS and the PAPR of the data. In addition, first information may be sent to the second communication apparatus, where the first information may indicate the plurality of power boosting values and time-domain unit positions respectively corresponding to the plurality of power boosting values. After the first information is sent, for a time-domain unit position corresponding to any one of the plurality of power boosting values, the first communication apparatus may send test data to the second communication apparatus at the time-domain unit position, and send a test DMRS to the second communication apparatus at the time-domain unit position based on the power boosting value (that is, send, to the second communication apparatus, the test DMRS obtained by performing power boosting based on the power boosting value).

It may be understood that, in this embodiment of this application, the test data may be determined by the first communication apparatus, may be determined by the second communication apparatus and indicated to the first communication apparatus, or may be determined by the first communication apparatus and the second communication apparatus through negotiation. This is not limited in this application. In an example, the first communication apparatus may select a part of data to be sent to the second communication apparatus as the test data, or the first communication apparatus may select a part of data that has been sent to the second communication apparatus as the test data.

For the test data and the test DMRS that are received in a time-domain unit corresponding to any power boosting value, the second communication apparatus may perform nonlinear compensation on the test data based on a nonlinear estimation result of the test DMRS, perform power reduction on the test DMRS based on the corresponding power boosting value, perform, based on a channel estimation result of the power-reduced test DMRS, channel equalization on the test data after nonlinear compensation, and determine (or evaluate) transmission performance (for example, a throughput or a BLER) of the test data after nonlinear compensation and channel equalization. After transmission performance of the test data received at the time-domain unit positions respectively corresponding to the plurality of power boosting values is determined, the second communication apparatus may send second information to the first communication apparatus. The second information may indicate the first power boosting value, and the first power boosting value may be determined by the second communication apparatus based on the transmission performance of the test data received at the time-domain unit positions respectively corresponding to the plurality of power boosting values. For example, a power boosting value corresponding to optimal transmission performance (for example, a throughput or a BLER) is selected as the first power boosting value.

It may be understood that, in this embodiment of this application, a time-domain unit may be a slot (slot), a mini-slot, a symbol, a subframe, a half frame, or the like. For example, the time-domain unit is a slot, and the time-domain unit position corresponding to the power boosting value may be a position of one or more slots in time domain.

In some implementations, to avoid power boosting performed on the first DMRS from affecting determining of a channel estimation result based on the first DMRS on a second communication apparatus side, the first communication apparatus may further send third information to the second communication apparatus. The third information may indicate the first power boosting value, used by the second communication apparatus to perform power reduction on the first DMRS before performing channel estimation based on the first DMRS, so that average power per symbol of the first DMRS and average power per symbol of the data are consistent (for example, average power on a symbol for sending the DMRS is consistent with average power on a symbol for sending the data).

S902: The first communication apparatus sends the data to the second communication apparatus, and sends the first DMRS to the second communication apparatus based on the first power boosting value; and correspondingly, the second communication apparatus receives the data and the first DMRS.

After determining the first power boosting value, the first communication apparatus may send the data and the first DMRS to the second communication apparatus. The first communication apparatus may send the first DMRS after performing power boosting on the first DMRS based on the first power boosting value.

In a possible implementation, that the first communication apparatus performs power boosting on a DMRS (for example, performs power boosting on the first DMRS based on the first power boosting value) may be indicated or triggered by the second communication apparatus.

In an example, when the first communication apparatus needs to perform nonlinear estimation, fourth information may be sent to the first communication apparatus. The fourth information may indicate to enable DMRS power boosting. After receiving the fourth information, the first communication apparatus may enable DMRS power boosting, for example, determine the first power boosting value, and send the first DMRS to the second communication apparatus based on the first power boosting value.

A sub-time-domain unit position occupied by the first DMRS may be pre-configured in a protocol or the like, may be determined by the first communication apparatus and configured for or indicated to the second communication apparatus, or may be configured for or indicated to the first communication apparatus by the second communication apparatus. This is not limited in this application. For example, the fourth information sent by the second communication apparatus to the first communication apparatus may further indicate a sub-time-domain unit position occupied by the first DMRS in a time-domain unit. When sending the first DMRS to the second communication apparatus based on the first power boosting value, the first communication apparatus may further perform, based on the first power boosting value, power boosting on the DMRS (namely, the first DMRS) at the sub-time-domain unit position indicated by the fourth information, and then send the DMRS to the second communication apparatus.

It should be understood that, in this embodiment of this application, a sub-time-domain unit is a time-domain granularity less than or equal to the time-domain unit. For example, the time-domain unit is a slot, and the sub-time-domain unit is a symbol. If the time-domain unit is a slot and the sub-time-domain unit is a symbol, a DMRS (for example, the first DMRS) that can be used for nonlinear estimation in one slot may occupy one or more symbols. For example, one slot includes two DMRS symbols (that is, there are two symbols for sending DMRSs). A DMRS on one of the two symbols may be configured for nonlinear estimation, or DMRSs on both symbols may be configured for nonlinear estimation.

S903: The second communication apparatus performs nonlinear compensation on the data based on a nonlinear estimation result obtained based on the first DMRS.

After receiving the first DMRS and the data, the second communication apparatus may perform nonlinear compensation on the data based on the nonlinear estimation result of the first DMRS. Power reduction may be further performed on the first DMRS based on the first power boosting value, and channel equalization is performed on the data based on a channel estimation result of the power-reduced first DMRS.

In some implementations, the first communication apparatus may further send a non-power-boosted second DMRS to the second communication apparatus. The second communication apparatus may further receive the non-power-boosted second DMRS from the first communication apparatus, and perform channel equalization on the data based on the channel estimation result of the power-reduced first DMRS and a channel estimation result of the second DMRS.

In an example, one slot includes two DMRS symbols (for example, a symbol 2 and a symbol 11), and other symbols are used for data transmission. The first communication apparatus may perform power boosting on a DMRS (namely, the first DMRS) on the symbol 2 based on the determined first power boosting value, and not perform power boosting on a DMRS (namely, the second DMRS) on the symbol 11. After receiving the DMRS (namely, the first DMRS) on the symbol 2, the DMRS (namely, the second DMRS) on the symbol 11, and data in the slot, the second communication apparatus may perform power reduction on the DMRS (namely, the first DMRS) on the symbol 2 based on the first power boosting value, and perform channel equalization on the data based on a channel estimation result of the power-reduced DMRS on the symbol 2 and a channel estimation result of the DMRS on the symbol 11.

In addition, currently, a Zadoff-Chu (Zadoff-Chu, ZC) sequence is usually used for a DMRS with the DFT-s-OFDM waveform, and a DMRS based on a ZC sequence has a low PAPR. Therefore, in this embodiment of this application, when the DMRS (for example, the first DMRS) and the data are transmitted by using the DFT-s-OFDM waveform, the first communication apparatus may select a signal generated by modulating a Gold sequence with QPSK as the DMRS (for example, the first DMRS), to increase a PAPR of the DMRS, and therefore reduce a required power boosting amount or do not perform power boosting on the DMRS (for example, the first DMRS).

In some implementations, considering a problem that a DMRS configuration for PAPR reduction is enabled during transmission using the CP-OFDM waveform when different CDM groups are used for the DMRS (as described in the foregoing part regarding the PAPR change, the low-PAPR DMRS configuration is added in R16 to mitigate the PAPR increase when different CDM groups are used), when the DMRS (for example, the first DMRS) corresponds to the CP-OFDM waveform across different CDM groups, the DMRS configuration for PAPR reduction may not be enabled (for example, the R16-lowPAPR DMRS configuration is not enabled), to increase a PAPR of the DMRS (for example, the first DMRS), and therefore reduce a required power boosting amount or do not perform power boosting on the DMRS (for example, the first DMRS). In addition, the current 3GPP specification TS 38.212 provides few DMRS port configuration combinations across different CDM groups, and port combinations across different CDM groups may be added to Table (Table) 7.3.1.1.2-13/14/15/17/18/19/21/22/23 in TS 38.212. During transmission using the CP-OFDM waveform, when the DMRS (for example, the first DMRS) corresponds to a port combination across different CDM groups in Table 7.3.1.1.2-13/14/15/17/18/19/21/22/23 in TS 38.212 or corresponds to a newly added port combination across different CDM groups, the DMRS configuration for PAPR reduction may not be enabled (for example, the R16-lowPAPR DMRS configuration is not enabled), to increase the PAPR of the DMRS (for example, the first DMRS), and therefore reduce the required power boosting amount or do not perform power boosting on the DMRS (for example, the first DMRS).

Similarly, when the DMRS (for example, the first DMRS) corresponds to the DFT-s-OFDM waveform across different CDM groups, and when a quantity of mapping layers is greater than 1, DMRS sequences corresponding to different CDM groups may be enabled to be the same, to increase the PAPR of the DMRS (for example, the first DMRS), and therefore reduce the required power boosting amount or do not perform power boosting on the DMRS (for example, the first DMRS).

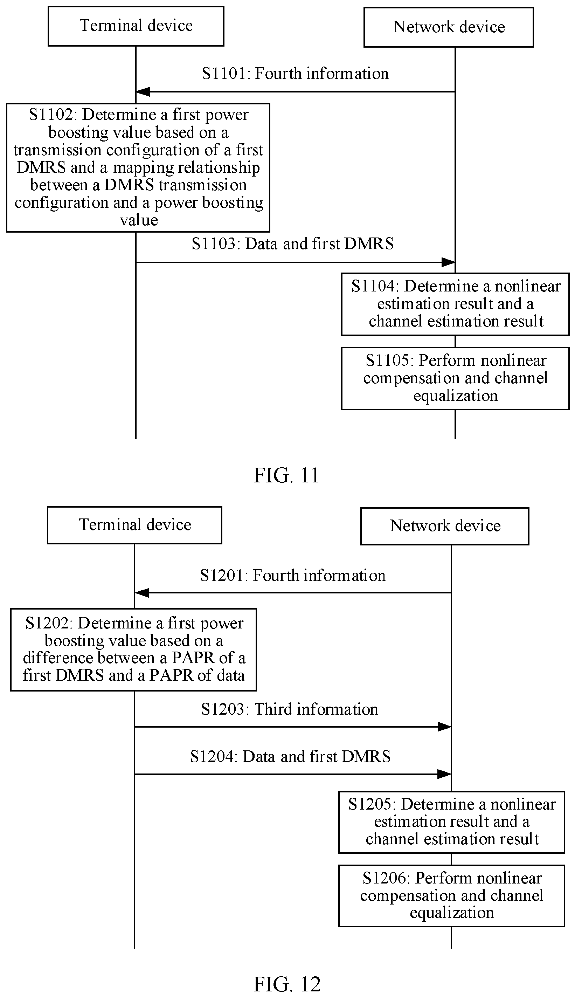

With reference to an example shown in FIG. 11, the following describes in detail the communication method shown in FIG. 9 by using an example in which the first communication apparatus is a terminal device, the second communication apparatus is a network device, and the first power boosting value is determined in the implementation 1.

S1101: A network device sends fourth information to a terminal device; and correspondingly, the terminal device receives the fourth information.

The fourth information may indicate the terminal device to enable DMRS power boosting for nonlinear estimation by the network device.

In a possible implementation, the fourth information may be control information or a signal sent by the network device to the terminal device, and may be carried by using DCI, radio resource control (radio resource control, RRC) signaling, media access control (media access control, MAC) signaling, or the like.

In addition, it may be understood that the network device may further indicate, to the terminal device by using signaling, a configuration for sending a DMRS (for example, a first DMRS) and a configuration for sending uplink data. The fourth information and the signaling used to indicate, to the terminal device, the configuration for sending the DMRS (for example, the first DMRS) and the configuration for sending the uplink data may be same signaling, or may be different signaling. This is not limited in this application.

S1102: The terminal device determines a first power boosting value based on a transmission configuration of the first DMRS and a mapping relationship between a DMRS transmission configuration and a power boosting value.

A sub-time-domain unit position occupied by the first DMRS may be pre-configured in a protocol or the like, may be determined by the terminal device and configured for or indicated to the network device, or may be configured for or indicated to the terminal device by the network device.

In an example, the fourth information sent by the network device to the terminal device may further indicate a sub-time-domain unit (for example, symbol) position occupied by the first DMRS in a time-domain unit (for example, a slot).

S1103: The terminal device sends data to the network device, and sends the first DMRS to the network device based on the first power boosting value; and correspondingly, the network device receives the data and the first DMRS.

After determining the first power boosting value, the terminal device may send the data and the first DMRS to the network device. The terminal device may send the first DMRS after performing, based on the first power boosting value and the sub-time-domain unit (for example, symbol) position occupied by the first DMRS in the time-domain unit (for example, a slot), power boosting on the first DMRS at the corresponding sub-time-domain unit (for example, symbol) position.

S1104: The network device determines a nonlinear estimation result and a channel estimation result based on the first DMRS.

In an example, the network device may perform nonlinear estimation on the received first DMRS to determine the nonlinear estimation result; and may perform power reduction on the first DMRS based on the first power boosting value, and determine the channel estimation result based on the power-reduced first DMRS and a non-power-boosted second DMRS (if existent) sent by the terminal device.

The first power boosting value may be determined by the network device based on the transmission configuration of the first DMRS and the mapping relationship between a DMRS transmission configuration and a power boosting value, or may be reported by the terminal device to the network device. This is not limited in this application.

S1105: The network device performs nonlinear compensation and channel equalization on the data based on the nonlinear estimation result and the channel estimation result.

With reference to an example shown in FIG. 12, the following describes in detail the communication method shown in FIG. 9 by using an example in which the first communication apparatus is a terminal device, the second communication apparatus is a network device, and the first power boosting value is determined in the implementation 2.

S1201: A network device sends fourth information to a terminal device; and correspondingly, the terminal device receives the fourth information.

The fourth information may indicate the terminal device to enable DMRS power boosting for nonlinear estimation by the network device.

In a possible implementation, the fourth information may be control information or a signal sent by the network device to the terminal device, and may be carried by using DCI, RRC signaling, MAC signaling, or the like.

In addition, it may be understood that the network device may further indicate, to the terminal device by using signaling, a configuration for sending a DMRS (for example, a first DMRS) and a configuration for sending uplink data. The fourth information and the signaling used to indicate, to the terminal device, the configuration for sending the DMRS (for example, the first DMRS) and the configuration for sending the uplink data may be same signaling, or may be different signaling. This is not limited in this application.

S1202: The terminal device determines a first power boosting value based on a difference between a PAPR of the first DMRS and a PAPR of data.

A difference between a PAPR of a DMRS and a PAPR of data is in one-to-one correspondence with a power boosting value.

A sub-time-domain unit position occupied by the first DMRS may be pre-configured in a protocol or the like, may be determined by the terminal device and configured for or indicated to the network device, or may be configured for or indicated to the terminal device by the network device.

In an example, the fourth information sent by the network device to the terminal device may further indicate a sub-time-domain unit (for example, symbol) position occupied by the first DMRS in a time-domain unit (for example, a slot).

S1203: The terminal device sends third information to the network device; and correspondingly, the network device receives the third information.

The third information may indicate the first power boosting value.

In a possible implementation, the third information may be sent by the terminal device to the network device by using RRC signaling or the like, and the third information indicating the first power boosting value may be carried in a UE assistance information (UEAssistanceInformation) field or the like in the foregoing signaling.

In an example, a DMRS power boosting value distribution range is 0 dB to 3 dB, with a step size of 0.5 dB. The third information may occupy three bits (bit) in the RRC signaling or the like, that is, the first power boosting value may be indicated by using three bits in the RRC signaling or the like. For example, the first power boosting value of 0 dB may be indicated by 000; the first power boosting value of 0.5 dB may be indicated by 001; the first power boosting value of 1 dB may be indicated by 010; the first power boosting value of 1.5 dB may be indicated by 011; the first power boosting value of 2 dB may be indicated by 100; the first power boosting value of 2.5 dB may be indicated by 101; and the first power boosting value of 3 dB may be indicated by 111.

S1204: The terminal device sends the data to the network device, and sends the first DMRS to the network device based on the first power boosting value; and correspondingly, the network device receives the data and the first DMRS.

After determining the first power boosting value, the terminal device may send the data and the first DMRS to the network device. The terminal device may send the first DMRS after performing, based on the first power boosting value and the sub-time-domain unit (for example, symbol) position occupied by the first DMRS in the time-domain unit (for example, a slot), power boosting on the first DMRS at the corresponding sub-time-domain unit (for example, symbol) position.

S1205: The network device determines a nonlinear estimation result and a channel estimation result based on the first DMRS.

In an example, the network device may perform nonlinear estimation on the received first DMRS to determine the nonlinear estimation result; and may perform power reduction on the first DMRS based on the first power boosting value, and determine the channel estimation result based on the power-reduced first DMRS and a non-power-boosted second DMRS (if existent) sent by the terminal device.

S1206: The network device performs nonlinear compensation and channel equalization on the data based on the nonlinear estimation result and the channel estimation result.

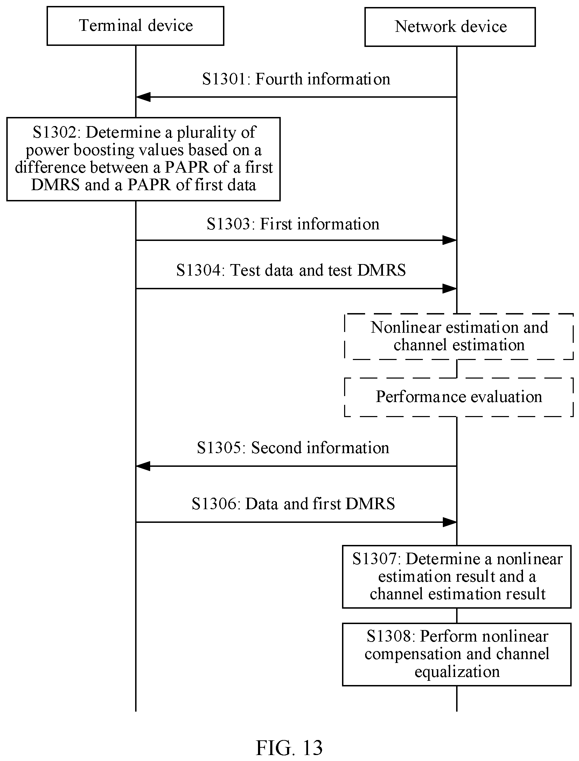

With reference to an example shown in FIG. 13, the following describes in detail the communication method shown in FIG. 9 by using an example in which the first communication apparatus is a terminal device, the second communication apparatus is a network device, and the first power boosting value is determined in the implementation 3.

S1301: A network device sends fourth information to a terminal device; and correspondingly, the terminal device receives the fourth information.

The fourth information may indicate the terminal device to enable DMRS power boosting for nonlinear estimation by the network device.

In a possible implementation, the fourth information may be control information or a signal sent by the network device to the terminal device, and may be carried by using DCI, RRC signaling, MAC signaling, or the like.

In addition, it may be understood that the network device may further indicate, to the terminal device by using signaling, a configuration for sending a DMRS (for example, a first DMRS) and a configuration for sending uplink data. The fourth information and the signaling used to indicate, to the terminal device, the configuration for sending the DMRS (for example, the first DMRS) and the configuration for sending the uplink data may be same signaling, or may be different signaling. This is not limited in this application.

S1302: The terminal device determines a plurality of power boosting values based on a difference between a PAPR of the first DMRS and a PAPR of data.

One difference between a PAPR of a DMRS and a PAPR of data corresponds to a plurality of power boosting values.

S1303: The terminal device sends first information to the network device; and correspondingly, the network device receives the first information.

The first information indicates the plurality of power boosting values corresponding to the difference between the PAPR of the first DMRS and the PAPR of the data, and time-domain unit positions respectively corresponding to the plurality of power boosting values.

S1304: For a time-domain unit position corresponding to any one of the plurality of power boosting values, the terminal device sends test data to the terminal device at the time-domain unit position, and sends a test DMRS to the network device based on the power boosting value; and correspondingly, the network device receives the test data and the test DMRS.

In an example, the terminal device may determine, based on a correspondence between a power boosting value and a difference between a PAPR of a DMRS and a PAPR of data (one difference corresponds to a plurality of power boosting values), the plurality of power boosting values corresponding to the difference between the PAPR of the first DMRS and the PAPR of the data. In addition, first information may be sent to the network device, where the first information may indicate the plurality of power boosting values and the time-domain unit positions respectively corresponding to the plurality of power boosting values. After the first information is sent, for a time-domain unit position corresponding to any one of the plurality of power boosting values, the terminal device may send the test data to the network device at the time-domain unit position, and send the test DMRS to the network device at the time-domain unit position based on the power boosting value (that is, send, to the network device, the test DMRS obtained by performing power boosting based on the power boosting value).

S1305: The network device sends second information to the terminal device; and correspondingly, the terminal device receives the second information.

The second information indicates a first power boosting value.

In an example, for the test data and the test DMRS that are received in a time-domain unit corresponding to any power boosting value, the network device may perform nonlinear compensation on the test data based on a nonlinear estimation result of the test DMRS, perform power reduction on the test DMRS based on the corresponding power boosting value, perform, based on a channel estimation result of the power-reduced test DMRS, channel equalization on the test data after nonlinear compensation, and determine (or evaluate) transmission performance (for example, a throughput or a BLER) of the test data after nonlinear compensation and channel equalization. After transmission performance of the test data received at the time-domain unit positions respectively corresponding to the plurality of power boosting values is determined, the network device may send the second information to the terminal device. The second information may indicate the first power boosting value, and the first power boosting value may be determined by the network device based on the transmission performance of the test data received at the time-domain unit positions respectively corresponding to the plurality of power boosting values. For example, a power boosting value corresponding to optimal transmission performance (for example, a throughput or a BLER) is selected as the first power boosting value.

In a possible implementation, the second information may be sent by the network device to the terminal device by using RRC signaling, DCI, MAC signaling, or the like.

S1306: The terminal device sends the data to the network device, and sends the first DMRS to the network device based on the first power boosting value; and correspondingly, the network device receives the data and the first DMRS.

After determining the first power boosting value, the terminal device may send the data and the first DMRS to the network device. The terminal device may send the first DMRS after performing, based on the first power boosting value and a sub-time-domain unit (for example, symbol) position occupied by the first DMRS in a time-domain unit (for example, a slot), power boosting on the first DMRS at the corresponding sub-time-domain unit (for example, symbol) position.

The sub-time-domain unit position occupied by the first DMRS may be pre-configured in a protocol or the like, may be determined by the terminal device and configured for or indicated to the network device, or may be configured for or indicated to the terminal device by the network device.

In an example, the fourth information sent by the network device to the terminal device may further indicate the sub-time-domain unit (for example, symbol) position occupied by the first DMRS in the time-domain unit (for example, a slot).

S1307: The network device determines a nonlinear estimation result and a channel estimation result based on the first DMRS.

In an example, the network device may perform nonlinear estimation on the received first DMRS to determine the nonlinear estimation result; and may perform power reduction on the first DMRS based on the first power boosting value, and determine the channel estimation result based on the power-reduced first DMRS and a non-power-boosted second DMRS (if existent) sent by the terminal device.

S1308: The network device performs nonlinear compensation and channel equalization on the data based on the nonlinear estimation result and the channel estimation result.

In some implementations, for the second communication apparatus to perform nonlinear estimation (that is, for the first communication apparatus to send a power-boosted DMRS (for example, the first DMRS)), periodic configuration, configuration accompanying transmission, or configuration by a transmit end (for example, the first communication apparatus) or a receive end (for example, the second communication apparatus) based on a requirement may be used.

For periodic configuration, a nonlinear estimation periodicity may be configured (or set) in a protocol, or the receive end (for example, the second communication apparatus) may configure (or set) a nonlinear estimation periodicity by using signaling (for example, RRC signaling) based on a nonlinear change status. The first communication apparatus may determine an interval in terms of a quantity of time-domain units based on the configured periodicity. When the configured periodicity is reached, the first communication apparatus performs power boosting on the first DMRS, and sends the power-boosted first DMRS. The second communication apparatus performs nonlinear estimation based on the first DMRS, to obtain a nonlinear estimation result. In a time-domain unit in which nonlinear estimation is not performed, the second communication apparatus may use a previously determined nonlinear estimation result for nonlinear compensation. In other words, a time-domain unit for sending the first DMRS may be determined, based on the periodicity, in a time-domain unit for sending the data.

In an example, the configured periodicity is eight time-domain units, the first communication apparatus may send the power-boosted first DMRS in the 1^{st} time-domain unit in the periodicity, and the second communication apparatus determines a nonlinear estimation result based on the first DMRS received in the 1^{st} time-domain unit in the periodicity, and may use the result in all time-domain units in the periodicity.

For the transmission-associated configuration, the first communication apparatus may send, during each time of data transmission, the first DMRS used for nonlinear estimation. For example, in each time-domain unit, power boosting is performed during transmission, and the second communication apparatus performs nonlinear estimation. In other words, a time-domain unit for sending the first DMRS may be each time-domain unit for sending the data.

For configuration by the transmit end (for example, the first communication apparatus) or the receive end (for example, the second communication apparatus) based on the requirement, the first communication apparatus or the second communication apparatus may request, by using RRC signaling and based on current communication quality, to perform or stop nonlinear estimation (for example, when a previous nonlinear estimation result is used and data communication throughput decreases, a request to perform nonlinear estimation may be made to improve a transmission rate). For example, when the communication quality is not higher than a communication quality threshold, the second communication apparatus may send RRC signaling to the first communication apparatus to request to perform nonlinear estimation; and when the communication quality is lower than the communication quality threshold, the second communication apparatus may send RRC signaling to the first communication apparatus to request to stop nonlinear estimation.

It may be understood that the DMRS (for example, the first DMRS) may also be replaced with a reference signal, and the reference signal may be an uplink reference signal (for example, a DMRS or a sounding reference signal (sounding reference signal, SRS)), a downlink reference signal (for example, a cell reference signal (cell reference signal, CRS)), a sidelink reference signal, or the like; and the communication method may be used for nonlinear estimation and nonlinear compensation in scenarios such as uplink communication, downlink communication, and sidelink communication.

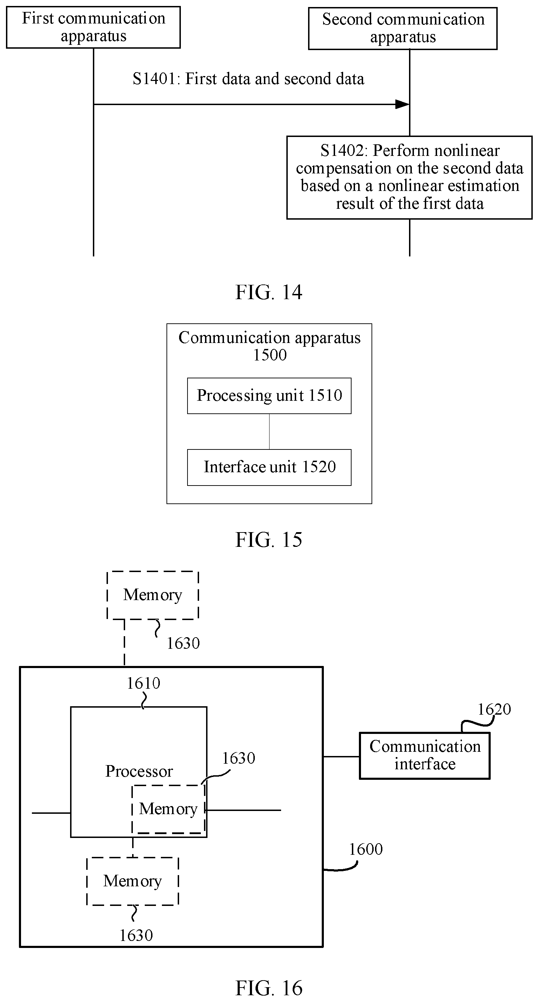

In some implementations, data may alternatively be used for nonlinear estimation. With reference to FIG. 14, that is, a diagram of a communication method, the following specifically describes a solution in which predefined data is used for nonlinear estimation. The method includes the following steps.

S1401: A first communication apparatus sends first data and second data to a second communication apparatus; and correspondingly, the second communication apparatus receives the first data and the second data.

S1402: The second communication apparatus performs nonlinear compensation on the second data based on a nonlinear estimation result of the first data.

In this embodiment of this application, data that can be used for nonlinear estimation may be predefined for each of different data transmission configurations. The data transmission configuration may include one or more of a waveform, a modulation scheme (for example, a modulation format and/or a modulation order), a quantity of mapping layers, or the like.

When the second data to be sent to the second communication apparatus exists, the first communication apparatus may determine, based on a transmission configuration of the second data and a mapping relationship between a data transmission configuration and predefined data, the first data mapped to the transmission configuration of the second data, and send the first data and the second data to the second communication apparatus.

After receiving the first data and the second data from the first communication apparatus, the second communication apparatus may determine a nonlinear estimation result based on the first data, and may perform nonlinear compensation on the second data based on the nonlinear estimation result.

Optionally, the second communication apparatus may further determine a channel estimation result based on the first data, and may perform channel equalization on the second data based on the channel estimation result.

The second communication apparatus may also determine the first data based on the transmission configuration of the second data and the mapping relationship between a data transmission configuration and predefined data. Certainly, the first data may alternatively be reported by the first communication apparatus to the second communication apparatus.

In an example, based on a characteristic that a low MCS corresponds to a low modulation order and a low code rate and therefore provides high data transmission reliability, the first communication apparatus may send the first data to the second communication apparatus by using a first MCS, where the first MCS is higher than a second MCS, and the second MCS is an MCS used to send the first data and the second data to the second communication apparatus. In this way, the second communication apparatus can learn of accurate first data.

In some implementations, the first data may alternatively be a part of the second data, or other data determined or generated by the first communication apparatus. Based on the characteristic that a low MCS corresponds to a low modulation order and a low code rate and therefore provides high data transmission reliability, the first communication apparatus may send the first data to the second communication apparatus by using the first MCS before sending the first data and the second data to the second communication apparatus. In this way, the second communication apparatus can learn of the accurate first data.

In an example, the first communication apparatus may use two time-domain units for nonlinear estimation, and send the first data in the 1^{st} time-domain unit by using a low MCS (namely, the first MCS). Because the MCS is low, the second communication apparatus can obtain a correct sent signal through error correction, that is, obtain accurate first data. In the 2^{nd} time-domain unit, the first communication apparatus may select one or more sub-time-domain units to send the same first data as that sent in the 1^{st} time-domain unit, and use a high MCS (namely, the second MCS). The second communication apparatus may determine, based on an error of the first data received in the 2^{nd} time-domain unit relative to the accurate first data, a nonlinear effect experienced by the first data in the 2^{nd} time-domain unit, to obtain a nonlinear estimation result. The nonlinear estimation result may be used to perform nonlinear compensation on the second data that is also sent by using the high MCS (namely, the second MCS).

It may be understood that, to implement functions in the foregoing embodiments, the first communication apparatus or the second communication apparatus includes corresponding hardware structures and/or software modules for performing various functions. A person skilled in the art should easily be aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraints of the technical solutions.

FIG. 15 and FIG. 16 are diagrams of possible structures of communication apparatuses according to embodiments of this application. These communication apparatuses may be configured to implement functions of the first communication apparatus or the second communication apparatus in the method embodiments, and therefore can also achieve beneficial effects of the method embodiments.

As shown in FIG. 15, the communication apparatus 1500 includes a processing unit 1510 and an interface unit 1520. The processing unit 1510 may be a processor or a processing circuit, and the interface unit 1520 may be a transceiver unit, an input/output interface, a transceiver, or the like. The communication apparatus 1500 may be configured to implement the steps performed by the first communication apparatus or the second communication apparatus in the foregoing embodiments.

When the communication apparatus 1500 is configured to implement the steps performed by the first communication apparatus in the foregoing embodiments:

The processing unit 1510 is configured to determine a first power boosting value, where the first power boosting value is determined based on a transmission configuration of a first DMRS and a mapping relationship between a DMRS transmission configuration and a power boosting value, or the first power boosting value is determined based on a difference between a PAPR of the first DMRS and a PAPR of data.

The interface unit 1520 is configured to: send the data to a second communication apparatus, and send the first DMRS to the second communication apparatus based on the first power boosting value, where a nonlinear estimation result obtained based on the first DMRS is used by the second communication apparatus to perform nonlinear compensation on the data.

In a possible design, the DMRS transmission configuration includes one or more of the following: a waveform, a modulation scheme, a quantity of mapping layers, or a CDM group configuration.

In a possible design, a difference between a PAPR of a DMRS and a PAPR of data is in one-to-one correspondence with a power boosting value.

In a possible design, one difference between a PAPR of a DMRS and a PAPR of data corresponds to a plurality of power boosting values, and when determining the first power boosting value, the processing unit 1510 is specifically configured to: send first information to the second communication apparatus through the interface unit 1520, where the first information indicates a plurality of power boosting values corresponding to the difference between the PAPR of the first DMRS and the PAPR of the data, and time-domain unit positions respectively corresponding to the plurality of power boosting values; for a time-domain unit position corresponding to any one of the plurality of power boosting values, send test data to the second communication apparatus at the time-domain unit position, and send a test DMRS to the second communication apparatus at the time-domain unit position based on the power boosting value, where a nonlinear estimation result of the test DMRS is used by the second communication apparatus to perform nonlinear compensation on the test data at the time-domain unit position; and receive second information from the second communication apparatus, where the second information indicates the first power boosting value, the first power boosting value belongs to the plurality of power boosting values, and the first power boosting value is determined by the second communication apparatus based on transmission performance of the test data received at the time-domain unit positions respectively corresponding to the plurality of power boosting values.

In a possible design, the interface unit 1520 is further configured to send third information to the second communication apparatus, where the third information indicates the first power boosting value.

In a possible design, the interface unit 1520 is further configured to: before the processing unit 1510 determines the first power boosting value, receive fourth information from the second communication apparatus, where the fourth information indicates to enable DMRS power boosting.

In a possible design, the fourth information further indicates a sub-time-domain unit position occupied by the first DMRS in a time-domain unit, and when sending the first DMRS to the second communication apparatus based on the first power boosting value, the interface unit 1520 is specifically configured to send the first DMRS to the second communication apparatus based on the sub-time-domain unit position occupied by the first DMRS in the time-domain unit and the first power boosting value.

In a possible design, the first DMRS is generated by modulating a Gold sequence with QPSK.

In a possible design, when the first DMRS corresponds to a CP-OFDM waveform across different CDM groups, a DMRS configuration for PAPR reduction is not enabled; or when the first DMRS corresponds to a DFT-s-OFDM waveform across different CDM groups, and when a quantity of mapping layers is greater than 1, the different CDM groups correspond to a same DMRS sequence.

In a possible design, a time-domain unit for sending the first DMRS is determined, based on a periodicity, in a time-domain unit for sending the data; or a time-domain unit for sending the first DMRS is each time-domain unit for sending the data.

In a possible design, the processing unit 1510 is further configured to: before the interface unit 1520 sends the first DMRS to the second communication apparatus based on the first power boosting value, determine that communication quality with the second communication apparatus is not higher than a communication quality threshold; and/or determine that a request to perform nonlinear estimation has been received from the second communication apparatus.

In a possible design, the interface unit 1520 is further configured to send a non-power-boosted second DMRS to the second communication apparatus.

Alternatively, the interface unit 1520 is configured to send first data and second data to a second communication apparatus, where the first data is determined based on a transmission configuration of the second data and a mapping relationship between a data transmission configuration and predefined data, and a nonlinear estimation result of the first data is used by the second communication apparatus to perform nonlinear compensation on the second data.

In a possible design, the data transmission configuration includes one or more of the following: a waveform, a modulation scheme, or a quantity of mapping layers.

In a possible design, the interface unit 1520 is further configured to: before sending the first data and the second data to the second communication apparatus, send the first data to the second communication apparatus by using a first MCS, where the first MCS is higher than a second MCS, and the second MCS is an MCS used to send the first data and the second data to the second communication apparatus.

When the communication apparatus 1500 is configured to implement the steps performed by the second communication apparatus in the foregoing embodiments:

The interface unit 1520 is configured to receive data and a first DMRS from a first communication apparatus, where the first DMRS is sent by the first communication apparatus based on a first power boosting value, and the first power boosting value is determined based on a transmission configuration of the first DMRS and a mapping relationship between a DMRS transmission configuration and a power boosting value, or the first power boosting value is determined based on a difference between a PAPR of the first DMRS and a PAPR of the data.

The processing unit 1510 is configured to perform nonlinear compensation on the data based on a nonlinear estimation result obtained based on the first DMRS.

In a possible design, the DMRS transmission configuration includes one or more of the following: a waveform, a modulation scheme, a quantity of mapping layers, or a CDM group configuration.

In a possible design, a difference between a PAPR of a DMRS and a PAPR of data is in one-to-one correspondence with a power boosting value.

In a possible design, one difference between a PAPR of a DMRS and a PAPR of data corresponds to a plurality of power boosting values, and the interface unit 1520 is further configured to: receive first information from the first communication apparatus, where the first information indicates a plurality of power boosting values corresponding to the difference between the PAPR of the first DMRS and the PAPR of the data, and time-domain unit positions respectively corresponding to the plurality of power boosting values; for a time-domain unit position corresponding to any one of the plurality of power boosting values, receive test data and a test DMRS from the first communication apparatus at the time-domain unit position, where the test DMRS is sent by the first communication apparatus based on the power boosting value, and a nonlinear estimation result of the test DMRS is used to perform nonlinear compensation on the test data at the time-domain unit position; and send second information to the first communication apparatus, where the second information indicates the first power boosting value, the first power boosting value belongs to the plurality of power boosting values, and the first power boosting value is determined based on transmission performance of the test data received at the time-domain unit positions respectively corresponding to the plurality of power boosting values.

In a possible design, the interface unit 1520 is further configured to receive third information from the first communication apparatus, where the third information indicates the first power boosting value.

In a possible design, the interface unit 1520 is further configured to: before receiving the data and the first DMRS from the first communication apparatus, send fourth information to the first communication apparatus, where the fourth information indicates to enable DMRS power boosting.

In a possible design, the fourth information further indicates a sub-time-domain unit position occupied by the first DMRS in a time-domain unit, and when receiving the data and the first DMRS from the first communication apparatus, the interface unit 1520 is specifically configured to receive the first DMRS from the first communication apparatus based on the sub-time-domain unit position occupied by the first DMRS in the time-domain unit.

In a possible design, the first DMRS is generated by modulating a Gold sequence with QPSK.

In a possible design, when the first DMRS corresponds to a CP-OFDM waveform across different CDM groups, a DMRS configuration for PAPR reduction is not enabled; or when the first DMRS corresponds to a DFT-s-OFDM waveform across different CDM groups, and when a quantity of mapping layers is greater than 1, the different CDM groups correspond to a same DMRS sequence.

In a possible design, the processing unit 1510 is further configured to: perform power reduction on the first DMRS based on the first power boosting value; and perform channel equalization on the data based on a channel estimation result of the power-reduced first DMRS.

In a possible design, the interface unit 1520 is further configured to receive a non-power-boosted second DMRS from the first communication apparatus; and the processing unit 1510 is further configured to: perform power reduction on the first DMRS based on the first power boosting value; and perform channel equalization on the data based on a channel estimation result of the power-reduced first DMRS and a channel estimation result of the second DMRS.

Alternatively, the interface unit 1520 is configured to receive first data and second data from a first communication apparatus, where the first data is determined based on a transmission configuration of the second data and a mapping relationship between a data transmission configuration and predefined data.

The processing unit 1510 is configured to perform nonlinear compensation on the second data based on a nonlinear estimation result of the first data.

In a possible design, the data transmission configuration includes one or more of the following: a waveform, a modulation scheme, or a quantity of mapping layers.

In a possible design, before receiving the first data and the second data from the first communication apparatus, the interface unit 1520 is further configured to receive the first data sent by the first communication apparatus by using a first MCS, where the first MCS is higher than a second MCS, and the second MCS is an MCS used by the first communication apparatus to send the first data and the second data.

As shown in FIG. 16, this application further provides a communication apparatus 1600. The communication apparatus includes a processor 1610, and may further include a communication interface 1620. The processor 1610 and the communication interface 1620 are coupled to each other. It may be understood that, the communication interface 1620 may be a transceiver, an input/output interface, an input interface, an output interface, an interface circuit, or the like. Optionally, the communication apparatus 1600 may further include a memory 1630, configured to: store instructions executed by the processor 1610, store input data required for running instructions by the processor 1610, or store data generated after the processor 1610 runs instructions. The memory 1630 may be a physically independent unit coupled to the processor 1610, or the processor 1610 and the memory 1630 are integrated together.

When the communication apparatus 1600 is configured to implement the steps performed by the first communication apparatus and the second communication apparatus in the foregoing embodiments, the processor 1610 may be configured to implement a function of the processing unit 1510, and the communication interface 1620 may be configured to implement a function of the interface unit 1520.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, the storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a network device or a terminal device. Certainly, the processor and the storage medium may alternatively exist as discrete components in the network device or the terminal device.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or instructions are loaded and executed on a computer, the procedures or functions in embodiments of this application are completely or partially performed. The computer may be a general-purpose computer, a dedicated computer, a computer network, a network device, user equipment, or another programmable apparatus. The computer programs or instructions may be stored in a computer-readable storage medium, or transmitted from one computer-readable storage medium to another computer-readable storage medium. For example, the computer programs or instructions may be transmitted from one network device, terminal, computer, server, or data center to another network device, terminal, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile storage medium or a non-volatile storage medium, or may include both a volatile storage medium and a non-volatile storage medium.

In various embodiments of this application, unless otherwise specified or there is a logic conflict, terms and/or descriptions in different embodiments are consistent and may be mutually referenced, and technical features in different embodiments may be combined based on an internal logical relationship thereof to form a new embodiment.

In addition, it should be understood that the term "for example" in embodiments of this application is used to represent giving an example, an illustration, or a description. Any embodiment or design solution described as an "example" in this application should not be explained as being more preferred or having more advantages than another embodiment or design solution. Exactly, the term "for example" is used to present a concept in a specific manner.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

## Claims

1. A communication method, comprising:
determining a first power boosting value, wherein the first power boosting value is determined based on a transmission configuration of a first demodulation reference signal DMRS and a mapping relationship between a DMRS transmission configuration and a power boosting value, or the first power boosting value is determined based on a difference between a peak-to-average power ratio PAPR of the first DMRS and a PAPR of data; and
sending the data to a second communication apparatus, and sending the first DMRS to the second communication apparatus based on the first power boosting value, wherein a nonlinear estimation result obtained based on the first DMRS is used by the second communication apparatus to perform nonlinear compensation on the data.

2. The method according to claim 1, wherein the DMRS transmission configuration comprises one or more of the following:
a waveform, a modulation scheme, a quantity of mapping layers, or a code division multiplexing CDM group configuration.

3. The method according to claim 1, wherein a difference between a PAPR of a DMRS and a PAPR of data is in one-to-one correspondence with a power boosting value.

4. The method according to claim 1, wherein one difference between a PAPR of a DMRS and a PAPR of data corresponds to a plurality of power boosting values, and determining the first power boosting value comprises:
sending first information to the second communication apparatus, wherein the first information indicates a plurality of power boosting values corresponding to the difference between the PAPR of the first DMRS and the PAPR of the data, and time-domain unit positions respectively corresponding to the plurality of power boosting values;
for a time-domain unit position corresponding to any one of the plurality of power boosting values, sending test data to the second communication apparatus at the time-domain unit position, and sending a test DMRS to the second communication apparatus at the time-domain unit position based on the power boosting value, wherein a nonlinear estimation result of the test DMRS is used by the second communication apparatus to perform nonlinear compensation on the test data at the time-domain unit position; and
receiving second information from the second communication apparatus, wherein the second information indicates the first power boosting value, the first power boosting value belongs to the plurality of power boosting values, and the first power boosting value is determined by the second communication apparatus based on transmission performance of the test data received at the time-domain unit positions respectively corresponding to the plurality of power boosting values.

5. The method according to any one of claims 1 to 3, wherein the method further comprises:
sending third information to the second communication apparatus, wherein the third information indicates the first power boosting value.

6. The method according to any one of claims 1 to 5, wherein before determining the first power boosting value, the method further comprises:
receiving fourth information from the second communication apparatus, wherein the fourth information indicates to enable DMRS power boosting.

7. The method according to claim 6, wherein the fourth information further indicates a sub-time-domain unit position occupied by the first DMRS in a time-domain unit, and sending the first DMRS to the second communication apparatus based on the first power boosting value comprises:
sending the first DMRS to the second communication apparatus based on the sub-time-domain unit position occupied by the first DMRS in the time-domain unit and the first power boosting value.

8. The method according to any one of claims 1 to 7, wherein the first DMRS is generated by modulating a Gold sequence with quadrature phase shift keying QPSK.

9. The method according to any one of claims 1 to 8, wherein when the first DMRS corresponds to a cyclic prefix orthogonal frequency division multiplexing CP-OFDM waveform across different CDM groups, a DMRS configuration for PAPR reduction is not enabled; or
when the first DMRS corresponds to a discrete Fourier transform spread orthogonal frequency division multiplexing DFT-s-OFDM waveform across different CDM groups, and when a quantity of mapping layers is greater than 1, the different CDM groups correspond to a same DMRS sequence.

10. The method according to any one of claims 1 to 9, wherein
a time-domain unit for sending the first DMRS is determined, based on a periodicity, in a time-domain unit for sending the data; or
a time-domain unit for sending the first DMRS is each time-domain unit for sending the data.

11. The method according to any one of claims 1 to 10, wherein before sending the first DMRS to the second communication apparatus based on the first power boosting value, the method further comprises:
determining that communication quality with the second communication apparatus is not higher than a communication quality threshold; and/or
determining that a request to perform nonlinear estimation has been received from the second communication apparatus.

12. The method according to any one of claims 1 to 11, wherein the method further comprises:
sending a non-power-boosted second DMRS to the second communication apparatus.

13. A communication method, comprising:
receiving data and a first demodulation reference signal DMRS from a first communication apparatus, wherein the first DMRS is sent by the first communication apparatus based on a first power boosting value, and the first power boosting value is determined based on a transmission configuration of the first DMRS and a mapping relationship between a DMRS transmission configuration and a power boosting value, or the first power boosting value is determined based on a difference between a peak-to-average power ratio PAPR of the first DMRS and a PAPR of the data; and
performing nonlinear compensation on the data based on a nonlinear estimation result obtained based on the first DMRS.

14. The method according to claim 13, wherein the DMRS transmission configuration comprises one or more of the following:
a waveform, a modulation scheme, a quantity of mapping layers, or a code division multiplexing CDM group configuration.

15. The method according to claim 13, wherein a difference between a PAPR of a DMRS and a PAPR of data is in one-to-one correspondence with a power boosting value.

16. The method according to claim 13, wherein one difference between a PAPR of a DMRS and a PAPR of data corresponds to a plurality of power boosting values, and the method further comprises:
receiving first information from the first communication apparatus, wherein the first information indicates a plurality of power boosting values corresponding to the difference between the PAPR of the first DMRS and the PAPR of the data, and time-domain unit positions respectively corresponding to the plurality of power boosting values;
for a time-domain unit position corresponding to any one of the plurality of power boosting values, receiving test data and a test DMRS from the first communication apparatus at the time-domain unit position, wherein the test DMRS is sent by the first communication apparatus based on the power boosting value, and a nonlinear estimation result of the test DMRS is used to perform nonlinear compensation on the test data at the time-domain unit position; and
sending second information to the first communication apparatus, wherein the second information indicates the first power boosting value, the first power boosting value belongs to the plurality of power boosting values, and the first power boosting value is determined based on transmission performance of the test data received at the time-domain unit positions respectively corresponding to the plurality of power boosting values.

17. The method according to any one of claims 13 to 15, wherein the method further comprises:
receiving third information from the first communication apparatus, wherein the third information indicates the first power boosting value.

18. The method according to any one of claims 13 to 17, wherein before receiving the data and the first DMRS from the first communication apparatus, the method further comprises:
sending fourth information to the first communication apparatus, wherein the fourth information indicates to enable DMRS power boosting.

19. The method according to claim 18, wherein the fourth information further indicates a sub-time-domain unit position occupied by the first DMRS in a time-domain unit, and receiving the data and the first DMRS from the first communication apparatus comprises:
receiving the first DMRS from the first communication apparatus based on the sub-time-domain unit position occupied by the first DMRS in the time-domain unit.

20. The method according to any one of claims 13 to 19, wherein the first DMRS is generated by modulating a Gold sequence with quadrature phase shift keying QPSK.

21. The method according to any one of claims 13 to 20, wherein when the first DMRS corresponds to a cyclic prefix orthogonal frequency division multiplexing CP-OFDM waveform across different CDM groups, a DMRS configuration for PAPR reduction is not enabled; or
when the first DMRS corresponds to a discrete Fourier transform spread orthogonal frequency division multiplexing DFT-s-OFDM waveform across different CDM groups, and when a quantity of mapping layers is greater than 1, the different CDM groups correspond to a same DMRS sequence.

22. The method according to any one of claims 13 to 21, wherein the method further comprises:
performing power reduction on the first DMRS based on the first power boosting value; and
performing channel equalization on the data based on a channel estimation result of the power-reduced first DMRS.

23. The method according to any one of claims 13 to 22, wherein the method further comprises:
receiving a non-power-boosted second DMRS from the first communication apparatus;
performing power reduction on the first DMRS based on the first power boosting value; and
performing channel equalization on the data based on a channel estimation result of the power-reduced first DMRS and a channel estimation result of the second DMRS.

24. A communication apparatus, comprising a unit configured to perform the method according to any one of claims 1 to 12 or the method according to any one of claims 13 to 23.

25. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus; and the processor is configured to implement, through a logic circuit or by executing instructions, the method according to any one of claims 1 to 12 or the method according to any one of claims 13 to 23.

26. A computer program product, comprising a computer program or instructions, wherein when the computer program or the instructions are executed by a processor, the method according to any one of claims 1 to 12 or the method according to any one of claims 13 to 23 is implemented.

27. A chip system, wherein the chip system comprises:
a processor and an interface, wherein the processor is configured to invoke instructions from the interface and execute the instructions, and when the processor executes the instructions, the method according to any one of claims 1 to 12 or the method according to any one of claims 13 to 23 is implemented.

28. A computer-readable storage medium, wherein the storage medium stores a computer program or instructions, and when the computer program or the instructions are executed by a processor, the method according to any one of claims 1 to 12 or the method according to any one of claims 13 to 23 is implemented.

29. A communication system, comprising a first communication apparatus and a second communication apparatus, wherein
the first communication apparatus is configured to implement the method according to any one of claims 1 to 12; and
the second communication apparatus is configured to implement the method according to any one of claims 13 to 23.
